# EUROPÄISCHE PATENTSCHRIFT

(11) **EP 3 609 648 B1**
(45) Veröffentlichungstag und Bekanntmachung des Hinweises auf die Patenterteilung: **06.10.2021**
(21) Anmeldenummer: 18727276.0
(22) Anmeldetag: 24.05.2018
(51) Int. Cl.: B23P 9/04, C21D 7/04

(54) **VERFAHREN UND VORRICHTUNG ZUM SCHLAGVERFESTIGEN VON ÜBERGANGSRADIEN EINER KURBELWELLE**
METHOD AND DEVICE FOR THE IMPACT HARDENING OF TRANSITION RADII OF A CRANKSHAFT
PROCÉDÉ ET DISPOSITIF D'ECROUISSAGE PAR IMPACT DES RAYONS DE TRANSITION D'UN VILEBREQUIN

(30) Priorität: 14.06.2017 DE 102017113066
(43) Veröffentlichungstag der Anmeldung: 19.02.2020
(73) Patentinhaber: Maschinenfabrik Alfing Kessler GmbH, 73433 Aalen (DE)
(72) Erfinder: REEB, Alfons, 73434 Aalen (DE); SCHMIDT, Jochen, 73560 Boebingen a. d. Rems (DE); GRIMM, Konrad, 73433 Aalen (DE)
(74) Vertreter: Lorenz, Markus
(86) Internationale Anmeldenummer: PCT/EP2018/063690
(87) Internationale Veröffentlichungsnummer: WO 2018/228791

(56) Entgegenhaltungen:
- WO-A1-2015/141611
- DE-A1-102005 032 185

## Beschreibung

Die Erfindung betrifft ein Verfahren zum Schlagverfestigen von Übergangsradien einer Kurbelwelle, insbesondere von Übergangsradien zwischen Pleuellagerzapfen und Kurbelwangen und/oder Übergangsradien zwischen Hauptlagerzapfen und den Kurbelwangen der Kurbelwelle nach dem Oberbegriff von Anspruch 1.

Die Erfindung betrifft außerdem eine Kurbelwelle.

Aufgrund der stetig fortschreitenden Entwicklung und Leistungssteigerung von Brennkraftmaschinen und an diese gestellte strengen Emissionsforderungen werden heutige Motoren in Folge immer stärker beansprucht. Aus diesem Grund stellt die Motorenindustrie unter anderem an die hochbelastete und für die Funktion einer Brennkraftmaschine wichtige Kurbelwelle hohe Anforderungen hinsichtlich der Festigkeit. Konstruktiv besteht dabei häufig die Anforderung, dass die Kurbelwelle leicht und der Platzbedarf gering sein soll. Für die Auslegung der Kurbelwelle bedeutet dies, dass eine Erhöhung der Beanspruchbarkeit nicht über die Erhöhung des Querschnitts, also über das Widerstandsmoment der Kurbelwelle, sondern möglichst über lokale Druckeigenspannungszustände erzielt werden sollte. Aus diesem Grund werden moderne Kurbelwellen unter Verwendung der verschiedensten Bearbeitungs- und Wärmebehandlungsverfahren hergestellt, so dass die Kurbelwellen immer höheren Motorleistungen ausgesetzt werden können.

Beispiele für solche Verfahren sind thermische Behandlungen, wie die Oberflächenhärteverfahren Induktions- und Einsatzhärten, Laserhärten oder Nitrieren, sowie Kaltverfestigungsverfahren, wie Festwalzen, Kugelstrahlen oder Schlagverfestigen. Hierbei handelt es sich um gängige und zum großen Teil ausgereifte Verfahren, die für die verschiedensten Einsatzzwecke geeignet sind.

Hinsichtlich Beispielen für solche Verfahren wird auf die folgenden Druckschriften verwiesen: EP 1 479 480 A1, EP 0 788 419 B1, EP 1 612 290 A1, DE 10 2007 028 888 A1 und EP 1 034 314 B1.

Beispielsweise betrifft die WO 2015/141611 A1 ein Kaltverfestigungsverfahren zum Verfestigen einer Kurbelwelle in hoch beanspruchten Bereichen der Kurbelwelle. Es wird hierzu vorgeschlagen, mittels eines Stempels die entsprechenden Bereiche der Kurbelwelle zu verpressen bzw. umzuformen.

Insbesondere das Schlagverfestigen ist ein vorteilhaftes Verfahren zur Steigerung der Dauerschwingfestigkeit, insbesondere der Biegewechselfestigkeit und der Torsionswechselfestigkeit, von Kurbelwellen. Die Steigerung der Dauerfestigkeit wird dabei dadurch erreicht, dass in die beanspruchten Bereiche bei Querschnittsübergängen und Querschnittsänderungen durch Kaltverformen, vorzugsweise Hämmern mittels spezieller Schlagwerkzeuge, in die Kurbelwelle Schlagkräfte eingebracht werden. Als Beispiel für ein derartiges Verfahren wird auf die DE 34 38 742 C2 und die EP 1 716 260 B1 verwieser (Basis für den Oberbegriff des Anspruchs 1).

Um ein nachteiliges Einbringen von Schubspannungen beim örtlichen Hämmern zu vermeiden, wird in der DE 34 38 742 C2 vorgeschlagen, zum Zeitpunkt der Druckimpulseinwirkung zwischen dem den Impuls ausgebenden Körper und der Werkstückoberfläche quer zur Impulsrichtung keine Relativbewegung stattfinden zu lassen. Hierzu soll der Vorschub während der Einbringung von Druckeigenspannungen durch die Schlagwerkzeuge schrittweise erfolgen.

Als Weiterentwicklung dieses Verfahrens wurde in der EP 1 716 260 B1 vorgeschlagen, dass die Kurbelwelle während der Bearbeitung kontinuierlich gedreht wird, wobei während der Druckeigenspannungseinbringung durch das Auftreffen des Schlagwerkzeugs auf das zu bearbeitende Kurbelwellensegment die Drehbewegung der Kurbelwelle während der Einwirkungszeit des Schlagwerkzeugs auf die Kurbelwelle gestoppt wird. Dabei werden die Schlagdrücke so gewählt, dass die Drehbewegung der Kurbelwelle zwangsweise durch die Schlagbewegung gestoppt wird.

Hierfür sind allerdings innerhalb der Antriebseinrichtung komplexe Komponenten wie z. B. Getriebe, Kupplungen und/oder Federsysteme notwendig, um zu vermeiden, dass die Antriebseinrichtung durch die "Zwangsstopps" Schaden erleidet. Des Weiteren muss die Taktung der Kurbelwelle und das Einbringen der Druckeigenspannungen prozesssicher synchronisiert werden. Die benötigten mechanischen Komponenten zur Sicherstellung einer robusten Anlage sind dabei komplex und teuer.

Der vorliegenden Erfindung liegt die Aufgabe zugrunde, die Verfahren zum Schlagverfestigen weiter zu entwickeln, um die Dauerfestigkeit von Kurbelwellen weiter zu verbessern.

Diese Aufgabe wird für das Verfahren durch die in Anspruch 1 aufgeführten Merkmale gelöst. Schließlich liegt der Erfindung auch die Aufgabe zugrunde, eine - insbesondere bezüglich ihrer Dauerfestigkeit - verbesserte Kurbelwelle bereitzustellen.

Bezüglich der Kurbelwelle wird die Aufgabe durch die in Anspruch 14 aufgeführten Merkmalen gelöst. Die abhängigen Ansprüche und die nachfolgend beschriebenen Merkmale betreffen vorteilhafte Ausführungsformen und Varianten der Erfindung.

Bei dem erfindungsgemäßen Verfahren zum Schlagverfestigen ist vorgesehen, dass Übergangsradien einer Kurbelwelle, insbesondere Übergangsradien zwischen Pleuellagerzapfen und Kurbelwangen und/oder Übergangsradien zwischen Hauptlagerzapfen und den Kurbelwangen der Kurbelwelle schlagverfestigt werden.

Die Pleuellagerzapfen und die Hauptlagerzapfen werden zur Vereinfachung nachfolgend teilweise auch nur als "Zapfen" bezeichnet. Der Begriff Zapfen kann dabei sowohl die Pleuellagerzapfen und die Hauptlagerzapfen bezeichnen, als auch nur die Pleuellagerzapfen oder nur die Hauptlagerzapfen. Insofern dies nicht explizit anders angegeben ist, sind hier alle drei Varianten durch den Begriff Zapfen umfasst.

Besonders bevorzugt eignet sich die Erfindung zur Steigerung der Dauerfestigkeit von beispielsweise Kurbelwellen mit 0,2 bis 8 m Länge oder mehr und/oder Haupt- und Pleuellagerzapfendurchmesser von 30 bis 500 mm oder mehr. Ganz besonders eignet sich die Erfindung allerdings zur Steigerung der Dauerfestigkeit von Großkurbelwellen von 1,5 bis 8 m Länge oder mehr und/oder Haupt- und Pleuellagerzapfendurchmesser von 100 bis 500 mm oder mehr.

Die Kurbelwelle kann verschiedene Arten von Übergangsradien, beispielsweise Hohlkehlen, zum Beispiel in Korbbogenform, oder auch hinterschnittene bzw. hinterlegte Radien bzw. Radien mit Übergängen, aufweisen. Die Übergangsradien können beispielsweise tangierend in die Lagerzapfenstellen bzw. Laufflächen der Haupt- und Pleuellagerzapfen übergehen.

Dies gilt auch für Übergänge zu Flanschen, Zapfen und sonstigen geometrischen Querschnittsveränderungen - sowohl für tangierende wie hinterlegte Radien.

Üblicherweise weist die Kurbelwelle an allen Übergängen bzw. Querschnittsänderungen Übergangsradien auf. Dies gilt insbesondere für Querschnittsänderungen zwischen Lagerzapfen und Kurbelwangen. Hierfür eignet sich die Erfindung in besonderer Weise. Übergangsradien können aber auch für beliebige andere Querschnittsänderungen, insbesondere für Querschnittsänderungen an den Endpartien der Kurbelwelle, z. B. bei einem Übergang auf einen Flansch, eine Scheibe oder eine Welle etc., vorgesehen sein. Ein Übergangsradius, dessen Dauerfestigkeit durch das erfindungsgemäße Verfahren verbessert werden soll, muss somit nicht unbedingt zwischen einem Pleuellagerzapfen und einer Kurbelwange oder einem Hauptlagerzapfen und einer Kurbelwange vorliegen, sondern kann an einer beliebigen Stelle der Kurbelwelle angeordnet sein. Die Begriffe "Pleuellagerzapfen", "Hauptlagerzapfen", "Flansch", "Zapfen" und/oder "Kurbelwange" können dementsprechend von einem Fachmann umgedeutet werden.

Nachfolgend wird die Erfindung im Wesentlichen anhand der Verfestigung von Übergangsradien zwischen Pleuellagerzapfen und Kurbelwange und/oder Hauptlagerzapfen und Kurbelwange beschrieben. Dies ist aber nicht einschränkend zu verstehen und soll nur dem besseren Verständnis bzw. der besseren Lesbarkeit dienen. Insofern im Rahmen der Erfindung auf einen Übergangsradius Bezug genommen wird kann es sich grundsätzlich um einen beliebigen Übergangsradius an einer beliebigen Stelle der Kurbelwelle handeln.

Erfindungsgemäß ist vorgesehen, dass zum Einbringen einer Schlagkraft in wenigstens einen der Übergangsradien entlang des ringförmig um die Kurbelwelle (insbesondere um den Pleuellagerzapfen und/oder Hauptlagerzapfen) umlaufenden jeweiligen Übergangsradius ein hoch beanspruchter Bereich, ein wenig beanspruchter Bereich und dazwischen liegende Zwischenbereiche definiert werden, wonach derart schlagverfestigt wird, dass die in die Zwischenbereich eingebrachte Schlagkraft in Richtung auf den hoch beanspruchten Bereich erhöht wird.

Unter dem Einbringen einer Schlagkraft kann verstanden werden, dass ein Schlagkopf eines Schlagwerkzeugs bzw. ein sog. "Döpper" einer Schlageinrichtung gegen den zu verfestigenden Bereich der Kurbelwelle, vorliegend einen Übergangsradius, schlägt. Der Schlag erfolgt dabei zielgerichtet auf die gewünschte Schlagposition entlang des ringförmig um den Zapfen umlaufenden Übergangsradius.

Mit einem hoch beanspruchten Bereich ist vorliegend ein Bereich des jeweiligen Übergangsradius der Kurbelwelle gemeint, der besonders hohen Belastungen, insbesondere im Motorenbetrieb, beispielsweise Zugkräften etc., ausgesetzt ist. Für die Belastbarkeit der Kurbelwelle ist die Beachtung der hoch beanspruchten Bereiche der Übergangsradien von zentraler Bedeutung. In diese Bereiche sollten vorzugsweise die höchsten Druckeigenspannungen eingebracht werden.

Mit einem hoch beanspruchten Bereich kann ein Bereich entlang des Umfangs des Übergangsradius und/oder ein Bereich entlang des ringförmig um die Kurbelwelle bzw. um den Pleuellagerzapfen und/oder den Hauptlagerzapfen umlaufenden jeweiligen Übergangsradius gemeint sein.

Beispielsweise kann ein Bereich um den sogenannten unteren Totpunkt eines Pleuellagerzapfens herum ein hoch beanspruchter Bereich im Sinne der Erfindung sein. Der untere Totpunkt ist der Bereich, der im Motorenbetrieb als Zugseite des Pleuellagerzapfens bzw. als der Druckseite entgegengesetzt bezeichnet werden kann.

Die Verfahren bzw. Vorrichtungen gemäß dem Stand der Technik sehen vor, dass bei der Schlagverfestigung eines Übergangsradius eine konstante Schlagkraft entlang des ringförmig um den Pleuellagerzapfen und/oder den Hauptlagerzapfen umlaufenden jeweiligen Übergangsradius eingebracht wird. Die Schlagkraft ist dabei derart gewählt, dass diese ausreicht, um genügend Druckeigenspannungen in die hoch beanspruchten Bereiche der Kurbelwelle einzubringen.

Für die Robustheit der Kurbelwelle ist es allerdings nicht erforderlich, die gleichen Druckeigenspannungen auch in die kaum beanspruchten Bereiche bzw. die wenig beanspruchten Bereiche (und die Zwischenbereiche) einzubringen. Die vollständig umlaufende Schlagverfestigung eines Übergangsradius entlang des Umfangs der Kurbelwelle verursacht einen hohen Aufwand.

Demnach wäre es vorzuziehen, (hohe) Druckeigenspannungen lediglich in den oder die hoch beanspruchten Bereiche der Übergangsradien einzubringen.

Auf Grundlage von Simulationen und Versuchsreihen haben die Erfinder mittlerweile herausgefunden, dass die Robustheit bzw. die Dauerfestigkeit der Kurbelwelle in gleichbleibender oder besserer Güte vorteilhaft auch dann erreicht werden kann, wenn die maximale Schlagkraft, die in einen bestimmten Übergangsradius eingebracht wird, lediglich in den hoch beanspruchten Bereich eingebracht wird, und wenn die Schlagkraft ausgehend von den Zwischenbereichen in Richtung auf den hoch beanspruchten Bereich erhöht wird.

Dadurch wird eine abrupte bzw. plötzliche Änderung der Schlagkraft von einem Schlag zum nachfolgenden Schlag vermieden.

Dadurch, dass die Übergangsradien nun nicht mehr vollständig umlaufend (mit derselben Schlagkraft) verfestigt werden, kann die Prozessgeschwindigkeit maximiert und eine Schädigung des Pleuellagerzapfens im oberen Totpunkt vermieden bzw. ausgeschlossen werden. Das erfindungsgemäße Verfahren ist somit besonders effizient und wirtschaftlich. Gleichzeitig können Kurbelwellen mit zumindest gleicher Güte bzw. Robustheit hergestellt werden als mit den bekannten Verfahren des Standes der Technik.

Durch die Fokussierung auf die hoch beanspruchten Bereiche der Übergangsradien kann sich sogar eine Verbesserung der Robustheit ergeben.

Das erfindungsgemäße Verfahren kann auch bei Kurbelwellen angewendet bzw. eingesetzt werden, die bereits vorher zur Steigerung ihrer Dauerfestigkeitseigenschaften durch andere Verfahren bearbeitet worden sind. So kann zum Beispiel eine Kurbelwelle, die durch Induktionshärten gehärtet wurde, nachträglich noch bezüglich ihrer Biege- und Torsionswechselfestigkeit durch eine Einbringung von Druckeigenspannungen nach dem erfindungsgemäßen Verfahren verbessert werden.

In einer Weiterbildung der Erfindung kann vorgesehen sein, dass die in die Zwischenbereiche eingebrachte Schlagkraft stetig in Richtung auf den hoch beanspruchten Bereich erhöht wird.

Insbesondere kann ein hoch beanspruchter Bereich vorgesehen sein, der beidseitig von Zwischenbereichen umgeben ist, wodurch der hoch beanspruchte Bereich von dem wenig beanspruchten Bereich getrennt ist.

Grundsätzlich kann im Sinne der Erfindung vorgesehen sein, dass die Schlagkraft innerhalb der Zwischenbereiche und/oder des wenig beanspruchten Bereichs einem beliebigen Verlauf folgt, wobei vorzugsweise allerdings sprungartige Änderungen der Schlagkraft vermieden werden und die Schlagkraft in dem hoch beanspruchten Bereich des Übergangsradius vorzugsweise am höchsten ist (insbesondere maximal, durchschnittlich und/oder in Summe aller einzelnen Schlagkräfte des Übergangsradius betrachtet).

Vorzugsweise wird die in die Zwischenbereiche eingebrachte Schlagkraft monoton, ganz besonders bevorzugt streng monoton, in Richtung auf den hoch beanspruchten Bereich erhöht.

In einer Weiterbildung kann vorgesehen sein, dass die in die Zwischenbereiche eingebrachte Schlagkraft gleichmäßig bzw. linear in Richtung auf den hoch beanspruchten Bereich erhöht wird.

Es ist auch möglich, die in die Zwischenbereiche eingebrachte Schlagkraft gemäß einer beliebigen mathematischen Funktion in Richtung auf den hoch beanspruchten Bereich zu erhöhen.

In einer Weiterbildung der Erfindung kann auch vorgesehen sein, dass in den wenig beanspruchten Bereich beim Schlagverfestigen keine Schlagkraft oder nur eine Schlagkraft eingebracht wird, die geringer ist als oder gleich groß ist wie die geringste Schlagkraft, die in die Zwischenbereiche eingebracht wird.

Es kann vorzugsweise vorgesehen sein, dass in dem wenig beanspruchten Bereich keine Schlagverfestigung des Übergangsradius stattfindet.

In einer Weiterbildung kann schließlich auch vorgesehen sein, dass in den hoch beanspruchten Bereich beim Schlagverfestigen eine Schlagkraft eingebracht wird, die größer ist als oder gleich groß ist wie die größte Schlagkraft, die in die Zwischenbereiche des Übergangsradius eingebracht wird.

Vorzugsweise wird in jedem Bereich nur die zum Erreichen der gewünschten Dauerschwingfestigkeit notwendige Schlagkraft eingebracht, wobei die Schlagkraft in Richtung auf Bereiche, für die eine andere Schlagkraft vorteilhaft ist, vorzugsweise gleichmäßig erhöht oder reduziert wird.

In einer Weiterbildung kann insbesondere vorgesehen sein, dass die Schlagkraft, die beim Schlagverfestigen in den hoch beanspruchten Bereich eingebracht wird, anhand der gewünschten Dauerfestigkeit der Kurbelwelle und/oder der gewünschten Dauerfestigkeit von Abschnitten der Kurbelwelle bestimmt wird.

Es kann also ausreichend sein, zum Erreichen der gewünschten Dauerfestigkeit der Kurbelwelle und/oder der gewünschten Dauerfestigkeit von Abschnitten der Kurbelwelle lediglich die notwendige Schlagkraft in den hoch beanspruchten Bereichen zu berücksichtigen.

In einer Weiterbildung kann auch vorgesehen sein, dass die Schlagkraft, die beim Schlagverfestigen in den hoch beanspruchten Bereich eingebracht wird, konstant ist bzw. über den hoch beanspruchten Bereich konstant gehalten wird.

In Simulationen und Versuchen hat sich herausgestellt, dass eine hohe Dauerfestigkeit bzw. Robustheit der Kurbelwelle insbesondere dadurch erreichbar ist, dass in den hoch beanspruchten Bereich eine (hohe) Schlagkraft mit einer konstanten Stärke eingebracht wird. Dies gilt insbesondere (aber nicht ausschließlich), wenn in die Zwischenbereiche ausgehend von dem hoch beanspruchten Bereich jeweils bezüglich ihrer Stärke abfallende Schlagkräfte, insbesondere von einem Schlag zum nachfolgenden Schlag, linear abfallende Schlagkräfte, eingebracht werden, die in dem wenig beanspruchten Bereich bis auf null reduziert werden können.

In einer Weiterbildung der Erfindung kann vorgesehen sein, dass der hoch beanspruchte Bereich entlang des ringförmig um den Pleuellagerzapfen umlaufenden Übergangsradius, ausgehend von einem höchstbelasteten Punkt des Pleuellagerzapfens, wenigstens ± 20°, vorzugsweise wenigstens ± 30°, weiter bevorzugt wenigstens ± 40°, besonders bevorzugt wenigstens ± 50°, ganz besonders bevorzugt wenigstens ± 60°, beispielsweise wenigstens ± 70°, wenigstens ± 80° oder wenigstens ± 90° beträgt.

Es kann auch eine Obergrenze für die Erstreckung des hoch beanspruchten Bereichs entlang des ringförmig um den Pleuellagerzapfen umlaufenden Übergangsradius festgelegt sein, wonach der hoch beanspruchte Bereich, ausgehend von dem höchstbelasteten Punkt des Pleuellagerzapfens, höchstens ± 90°, vorzugsweise höchstens ± 80°, weiter bevorzugt höchstens ± 70°, ganz besonders bevorzugt höchstens ± 60°, beispielsweise ± 50°, beispielsweise höchstens ± 40°, höchstens ± 30° oder höchstens ± 20° beträgt.

Bei dem höchstbelasteten Punkt des Pleuellagerzapfens handelt es sich insbesondere um den unteren Totpunkt des Pleuellagerzapfens.

Es kann somit also insbesondere vorgesehen sein, dass ausgehend von einem höchstbelasteten Punkt eines Zapfens der hoch beanspruchte Bereich entlang des Umfangs des Zapfens definiert wird.

In einer Weiterbildung kann außerdem vorgesehen sein, dass der hoch beanspruchte Bereich entlang des ringförmig um den Hauptlagerzapfen umlaufenden Übergangsradius, ausgehend von einem höchstbelasteten Punkt des Hauptlagerzapfens, wenigstens ± 20°, vorzugsweise wenigstens ± 30°, weiter bevorzugt wenigstens ± 40°, besonders bevorzugt wenigstens ± 50°, ganz besonders bevorzugt wenigstens ± 60°, beispielsweise wenigstens ± 70°, wenigstens ± 80° oder wenigstens ± 90° beträgt.

Es kann auch eine Obergrenze für die Erstreckung des hoch beanspruchten Bereichs entlang des ringförmig um den Hauptlagerzapfen umlaufenden Übergangsradius festgelegt sein, wonach der hoch beanspruchte Bereich, ausgehend von einem höchstbelasteten Punkt des Hauptlagerzapfens, höchstens ± 90°, vorzugsweise höchstens ± 80°, weiter bevorzugt höchstens ± 70°, ganz besonders bevorzugt höchstens ± 60°, beispielsweise höchstens ± 50°, beispielsweise höchstens ± 40°, höchstens ± 30° oder höchstens ± 20° beträgt.

Dies gilt analog auch für Übergänge zu Flanschen, Zapfen und sonstigen geometrischen Querschnittsveränderungen - sowohl für tangierende wie hinterlegte Radien.

Zur Bestimmung des hoch beanspruchten Bereichs bzw. des höchstbelasteten Punkts können Simulationen und/oder Berechnungen und/oder Versuchsreihen des jeweiligen Kurbelwellentyps herangezogen werden.

Die jeweiligen hoch beanspruchten Bereiche oder die jeweiligen höchstbelasteten Punkte der Übergangsradien können sich bei den einzelnen Übergangsradien einer Kurbelwelle unterscheiden. Der hoch beanspruchte Bereich oder der höchstbelastete Punkt kann aber auch bei allen Übergangsradien, insbesondere bei einem Typ von Übergangsradien, übereinstimmen. Gegebenenfalls kann der hoch beanspruchte Bereich oder der höchstbelastete Punkt bei allen Übergangsradien zwischen Pleuellagerzapfen und Kurbelwangen einerseits und zwischen Hauptlagerzapfen und Kurbelwangen andererseits übereinstimmen.

Selbiges gilt auch für den oder die Zwischenbereiche sowie den wenig beanspruchten Bereich.

Der hoch beanspruchte Bereich kann ausgehend von dem unteren Totpunkt des Pleuellagerzapfens bzw. dem höchstbelasteten Punkt des Hauptlagerzapfens grundsätzlich eine beliebige Größe aufweisen, beispielsweise auch kleiner sein als ± 20° oder größer sein als ± 90°.

In einer Weiterbildung der Erfindung kann insbesondere festgelegt sein, dass der höchstbelastete Punkt (insbesondere bezüglich Torsion) eines Übergangsradius eines Hauptlagerzapfens im Querschnitt der Kurbelwelle auf dem Schnittpunkt des Übergangsradius des Hauptlagerzapfens mit der Verbindungslinie der Mittelpunkte des Hauptlagerzapfens und des an den Übergangsradius des Hauptlagerzapfens angrenzenden Pleuellagerzapfens liegt.

Der höchstbelastete Punkt eines Übergangsradius eines Hauptlagerzapfens kann auf einer dem unteren Totpunkt eines angrenzenden Pleuellagerzapfens abgewandten Seite der Kurbelwelle angeordnet sein.

Erfindungsgemäß ist vorgesehen, dass das Schlagverfestigen derart erfolgt, dass sich die Eindrücke eines Schlagkopfes wenigstens eines Schlagwerkzeugs entlang des ringförmig um die Kurbelwelle (insbesondere um den Pleuellagerzapfen und/oder Hauptlagerzapfen) umlaufenden jeweiligen Übergangsradius definiert überlappen.

Durch sich überlappende Schlageindrücke bzw. eng angeordnete und exakte festgelegte Schlagpositionen kann eine besonders wirksame Erhöhung der Dauerschwingfestigkeit bzw. Biegewechselfestigkeit und Torsionswechselfestigkeit erreicht werden.

In einer Weiterbildung der Erfindung kann ferner vorgesehen sein, dass der Schlagkopf des wenigstens einen Schlagwerkzeugs die Schlagkraft unter einem verstellbaren Schlagwinkel in den Übergangsradius einbringt.

Der hochbelastete Bereich, die Zwischenbereiche und/oder der wenig beanspruchte Bereich kann bzw. können sich auch auf den Umfang des Übergangsradius selbst beziehen und nicht nur auf den Umfang des jeweiligen Zapfens, um den der Übergangsradius ringförmig umläuft. Die Beanspruchung eines Übergangsradius kann entlang des Umfangs des Übergangsradius ebenfalls unterschiedlich sein.

Unter diesem Aspekt wird der Schlagwinkel derart gewählt, dass die Schlagkraft in einem Winkel eingeleitet wird, der genau auf die im Betrieb der Kurbelwelle höchstbelastete Stelle bzw. das Beanspruchungsmaximum, unter Beachtung der Biegebelastung und Torsionsbelastung, bezogen auf den Umfang des Übergangsradius angepasst ist.

In einer besonderen Variante kann dazu vorgesehen sein, dass zum Schlagverfestigen eine Schlageinrichtung verwendet wird, die einen Schlagkolben, eine Umlenkeinheit und das wenigstens eine Schlagwerkzeug aufweist, wobei das wenigstens eine Schlagwerkzeug an der Umlenkeinheit befestigt ist, und wobei der Schlagkolben über die Umlenkeinheit einen Kraftstoß auf das wenigstens eine Schlagwerkzeug überträgt, wonach der Schlagkopf des wenigstens einen Schlagwerkzeugs unter dem Schlagwinkel die Schlagkraft in den Übergangsradius einbringt, und wobei der Schlagwinkel eingestellt wird, indem der Abstand zwischen einem Umlenkpunkt der Umlenkeinheit und dem vorderen Ende des Schlagkopfes des wenigstens einen Schlagwerkzeugs eingestellt wird.

Hierzu kann ein Schlagkolben eingesetzt werden, der einen starken Impuls bzw. einen Kraftstoß (z. B. pneumatisch, hydraulisch und/oder elektrisch erzeugt) auf den Schlagkopf überträgt.

Je nach Schlagkraft entstehen sichtbare Schlageindrücke des Schlagkopfes an den jeweiligen Schlagpositionen. Die Tiefe der Schlageindrücke und die Qualität bzw. die Tiefenwirkung der eingebrachten Druckeigenspannung hängen dabei von der gewählten Schlagkraft ab. Das Werkzeug und die Prozessparameter sind vorzugsweise auf die jeweilige Kurbelwelle und dabei ggf. auf partielle geometrische Änderungen (Querschnittsänderungen) exakt abgestimmt.

Die Schlagkraft wiederum kann durch Veränderung des Schlagwinkels individuell noch genauer auf das Beanspruchungsmaximum eingestellt bzw. ausgerichtet werden.

Bei dem Umlenkpunkt kann es sich um den Mittelpunkt der Umlenkeinheit handeln bzw. um die Drehachse/Aufhängung des Schlagwerkzeugs bzw. der Schlagwerkzeuge.

Mit dem vorderen Ende des Schlagkopfes ist der Teil (bzw. die Oberfläche) des Schlagkopfes gemeint, mit dem der Schlagkopf zum Schlagverfestigen gegen die Kurbelwelle schlägt.

Durch den Abstand zwischen dem Umlenkpunkt und dem vorderen Ende des Schlagkopfes kann auch der Abstand zwischen dem Umlenkpunkt und dem Mittelpunkt des Schlagkopfes oder der Abstand zwischen dem Umlenkpunkt und dem hinteren Ende des Schlagkopfes einstellbar sein.

Dadurch, dass der Abstand zwischen dem Umlenkpunkt der Umlenkeinheit und dem Schlagkopf eines Schlagwerkzeugs einstellbar ist, kann der Winkel unter dem die Schlagkraft in den Übergangsradius eingeleitet wird, verändert bzw. eingestellt werden.

Die besondere Variante, den Abstand zwischen einem Umlenkpunkt der Umlenkeinheit und dem vorderen Ende des Schlagkopfes des wenigstens einen Schlagwerkzeugs zu variieren, ermöglicht es somit, die Schlagkraft an einer bevorzugten Stelle und in einem bevorzugten Winkel einzubringen.

Mit den Verfahren bzw. Vorrichtungen des bekannten Standes der Technik ist es im Gegensatz dazu nur möglich, die Schlagkraft in einem vordefinierten fixen Winkel in die Übergangsradien einzubringen. Hierfür ist meist ein Schlagwinkel von ca. 45° vorgesehen.

In Abhängigkeit der Anwendung der Kurbelwelle kann es von Vorteil sein, statt eines festen Schlagwinkels von beispielsweise 45° einen abweichenden Winkel zu wählen.

Die höchstbelastete Stelle der Kurbelwelle ergibt sich im Regelfall aus dem Motorenbetrieb bzw. wird über Berechnungsmodelle bestimmt. Für neue Betrachtungsansätze werden dazu die maximalen Belastungen aus einaxialer Belastung und aus biaxialer, überlagerter Belastung betrachtet.

Durch das Einstellen des Schlagwinkels kann ein hochpräzises Arbeiten bzw. Schlagverfestigen gewährleistet sein. Dadurch, dass die Schlagkräfte gezielt in ein Beanspruchungsmaximum des Übergangsradius entlang des Umfangs des Übergangsradius und entlang des ringförmig um die Kurbelwelle umlaufenden Übergangsradius eingebracht werden können und in einem optimalen Winkel verlaufen, kann gegebenenfalls die Schlagkraft reduziert werden, während der erreichbare Dauerfestigkeitseffekt unverändert bleibt. Die Vorrichtung ist somit noch effizienter.

Anwendungsbedingt kann durch das gezielte Einbringen der Schlagkräfte die Dauerfestigkeit der Kurbelwelle - ausgehend von den derzeitigen Möglichkeiten im Stand der Technik - sogar noch weiter erhöht werden, sollte dies erforderlich sein.

In einer Ausgestaltung kann vorgesehen sein, dass die Länge des wenigstens einen Schlagwerkzeugs einstellbar, vorzugsweise teleskopierbar ist.

Hierzu kann das Schlagwerkzeug in der Art einer Teleskopschiene ausgebildet sein bzw. einen Teleskopauszug aufweisen. Das wenigstens eine Schlagwerkzeug kann auch als Teleskoprohr ausgebildet sein. Die Offenbarung ist selbstverständlich nicht auf eine bestimmte Art des Teleskopauszugs bzw. eine bestimmte Art der Teleskopierbarkeit beschränkt zu verstehen.

Die Länge des wenigstens einen Schlagwerkzeugs kann beispielsweise auch über ein Gewinde eingestellt werden.

Es kann vorgesehen sein, dass die Länge des wenigstens einen Schlagwerkzeugs manuell und/oder aktorisch einstellbar ist. Hierzu kann beispielsweise ein Elektromotor, insbesondere ein Linearantrieb, vorgesehen sein. Bei dem Elektromotor kann es sich grundsätzlich aber um einen beliebigen Elektromotor, beispielsweise einen Drehstrommotor, einen Wechselstrommotor, einen Gleichstrommotor oder einen Universalmotor, handeln. Vorzugsweise kann ein Schrittmotor verwendet werden.

In einer Ausgestaltung kann eine Wechseleinrichtung mit einem Magazin vorgesehen sein, um das wenigstens eine Schlagwerkzeug und/oder den wenigstens einen Schlagkopf und/oder die Umlenkeinheit und/oder die Schlageinrichtung auszutauschen, um den Abstand zwischen dem Umlenkpunkt der Umlenkeinheit und dem vorderen Ende eines Schlagkopfes des wenigstens einen Schlagwerkzeugs auf einen anderen Wert einzustellen.

Durch die hohen Schlagkräfte wirken bekanntermaßen hohe mechanische Belastungen auf die Komponenten der Schlageinrichtung. Insbesondere bei Verwendung filigraner Bauteile zur Einstellung der Länge des wenigstens einen Schlagwerkzeugs kann dadurch die Lebensdauer der Schlageinrichtung bzw. deren Komponenten eingeschränkt sein. Wenn ein Magazin bzw. eine Wechseleinrichtung für das wenigstens eine Schlagwerkzeug und/oder den Schlagkopf und/oder die Umlenkeinheit und/oder die Schlageinrichtung vorgesehen ist, kann die Schlageinrichtung bzw. die Vorrichtung insgesamt besonders robust ausgebildet sein, da gegebenenfalls auf eine Teleskopierung des wenigstens einen Schlagwerkzeugs verzichtet werden kann.

Der Abstand zwischen dem Umlenkpunkt der Umlenkeinheit und dem Schlagkopf des wenigstens einen Schlagwerkzeugs kann somit vorteilhaft durch die Wechseleinrichtung mit dem Magazin einstellbar sein, indem Komponenten der Schlageinrichtung zur Längeneinstellung ausgetauscht werden.

Es kann auch vorgesehen sein, dass der Abstand zwischen dem Umlenkpunkt der Umlenkeinheit und dem vorderen Ende eines Schlagkopfes des wenigstens einen Schlagwerkzeugs durch Verwenden von Distanzringen bzw. Abstandshaltern mit unterschiedlichen Abmessungen einstellbar ist.

In einer Ausgestaltung können zwei oder mehrere Schlageinrichtungen vorgesehen sein, wobei der Abstand zwischen dem Umlenkpunkt der Umlenkeinrichtung und dem vorderen Ende des Schlagkopfes einer ersten Schlageinrichtung nicht identisch ist mit dem Abstand zwischen dem Umlenkpunkt der Umlenkeinrichtung und dem vorderen Ende des Schlagkopfes einer zweiten Schlageinrichtung.

Es können somit mehrere unabhängig voneinander verwendbare Schlagwerkzeuge, insbesondere durch Verwenden mehrerer Schlageinrichtungen mit jeweils einem oder mehreren Schlagwerkzeugen, vorgesehen sein, die jeweilige Schlagkräfte in beliebige Übergangsradien der Kurbelwelle einzubringen vermögen, wobei eine entsprechende Synchronisierung untereinander bzw. zwischen Steuerungen der Schlagwerkzeuge vorgesehen sein kann. Die Schlagverfestigung der Kurbelwelle kann somit auch besonders schnell erfolgen, da mehrere Schlageinrichtungen gleichzeitig verwendbar sind.

In einer Ausgestaltung kann vorgesehen sein, dass die wenigstens eine Schlageinrichtung zwei Schlagwerkzeuge aufweist, wobei die Schlagwerkzeuge derart an der Umlenkeinheit angeordnet sind, dass jedes Schlagwerkzeug einem Übergangsradius zugeordnet ist.

Es kann vorgesehen sein, dass zwei Schlagwerkzeuge in einer gemeinsamen Schlageinrichtung verwendet werden, die vorzugsweise Schlagkräfte in beide Übergangsradien eines Pleuellagerzapfens oder eines Hauptlagerzapfens gleichzeitig einbringen.

Dies gilt auch für Übergänge zu Flanschen, Zapfen und sonstigen geometrischen Querschnittsveränderungen - sowohl für tangierende wie hinterlegte Radien.

Die Schlagwerkzeuge können vorzugsweise von einem gemeinsamen Schlagkolben betrieben werden.

Bei Verwendung mehrerer Schlagwerkzeuge (und/oder Schlageinrichtungen) kann eine gemeinsame Druckimpulsvorrichtung vorgesehen sein, die die entsprechenden Schlagkräfte für die Schlagwerkzeuge auf hydraulische, pneumatische, mechanische und/oder elektrische Weise (gemeinsam oder individuell) für die Schlagwerkzeuge zu erzeugen vermag.

Bei Verwendung mehrerer Schlageinrichtungen kann vorgesehen sein, dass die jeweiligen Abstände zwischen den Umlenkpunkten und den Schlagköpfen bei allen Schlagwerkzeugen identisch sind oder bei zumindest zwei Schlagwerkzeugen voneinander abweichen. Vorzugsweise ist der jeweilige Abstand zwischen dem Umlenkpunkt der Umlenkeinheit und den Schlagköpfen zweier Schlagwerkzeuge, die zur Verfestigung von Übergangsradien, die an denselben Zapfen angrenzen, identisch.

In einer Ausgestaltung kann vorgesehen sein, dass der Schlagwinkel zwischen der Längsachse des wenigstens einen Schlagwerkzeugs und einem Lot zu der Längsachse der Kurbelwelle 5° bis 80°, vorzugsweise 10° bis 70°, weiter bevorzugt 20° bis 60° und besonders bevorzugt 30° bis 55°, insbesondere 35° bis 50°, beträgt.

Vorzugsweise kann, insbesondere wenn das Beanspruchungsmaximum nicht genau bekannt ist, ein Schlagwinkel von 45° vorgesehen sein.

Beispielsweise kann vorgesehen sein, dass ein Schlagkopf einen Radius aufweist, dessen Größe 75% bis 99% des Übergangsradius, vorzugsweise 85% bis 98% des Übergangsradius und besonders bevorzugt 85% bis 95% des Übergangsradius beträgt.

Der Radius des Schlagkopfes kann aber auch kleiner sein als 75% des Übergangsradius oder größer sein als 95% des Übergangsradius. Der Radius des Schlagkopfes kann auch mit dem Übergangsradius übereinstimmen.

Der Schlagkopf kann vorzugsweise im Wesentlichen kugelförmig ausgebildet sein, insbesondere im vorderen Bereich bzw. am vorderen Ende des Schlagkopfes, der bzw. das zur Verfestigung gegen die Kurbelwelle schlägt. Grundsätzlich kann der Schlagkopf aber eine beliebige Geometrie aufweisen und beispielsweise auch oval, halbkugelförmig oder flach ausgebildet sein.

In einer Ausgestaltung des Verfahrens kann vorgesehen sein, dass der Schlagwinkel entsprechend dem Verlauf eines Beanspruchungsmaximums des Übergangsradius gewählt wird, wonach der Verlauf des Beanspruchungsmaximums auf Basis von Simulationen und/oder Berechnungen und/oder Versuchsreihen des jeweiligen Kurbelwellentyps bestimmt wird.

Auch die hoch belasteten Bereiche der Kurbelwelle entlang des Umfangs des Übergangsradius werden vorzugsweise im Vorfeld identifiziert. Durch das erfindungsgemäße Verfahren kann dann die Schlagkraft gezielt in die entsprechenden Beanspruchungsmaxima eingebracht werden. Durch Berücksichtigung der individuellen Anforderungen an verschiedene Kurbelwellentypen und Einsatzzwecke der Kurbelwellen kann die Kurbelwelle durch das Einstellen des Abstands zwischen Umlenkpunkt der Umlenkeinheit und dem vorderen Ende eines Schlagkopfes des wenigstens einen Schlagwerkzeugs mit besonders hoher Präzision schlagverfestigt werden.

Durch die Einstellung des Abstands ist nicht nur der Schlagpunkt, sondern auch die Schlagrichtung festlegbar. Hierdurch können Kurbelwellen hergestellt werden, deren Dauerschwingfestigkeit, insbesondere deren Biege- und Torsionswechselfestigkeit, weiter optimiert ist. Alternativ kann durch die nunmehr zur Verfügung stehende Präzision eine bestehende Dauerschwingfestigkeit bereits durch den Einsatz geringer Schlagkräfte erreicht werden.

In einer Ausgestaltung der Erfindung kann vorgesehen sein, dass alle Übergangsradien zwischen den Pleuellagerzapfen und den Kurbelwangen und/oder alle Übergangsradien zwischen den Hauptlagerzapfen und den Kurbelwangen unter demselben Schlagwinkel schlagverfestigt werden.

Es können auch alle Übergänge zu Flanschen, Zapfen und/oder sonstige geometrischen Querschnittsveränderungen - sowohl für tangierende wie hinterlegte Radien - unter demselben Schlagwinkel schlagverfestigt werden.

Es kann also vorgesehen sein, dass alle Übergangsradien der Kurbelwelle unter demselben Schlagwinkel schlagverfestigt werden, wobei der hierzu gewählte Schlagwinkel hinsichtlich dem hoch belasteten Bereich bzw. der höchstbelasteten Stelle der Kurbelwelle optimiert ist. Es kann aber auch vorgesehen sein, dass alle Übergangsradien der Pleuellagerzapfen unter einem ersten Schlagwinkel schlagverfestigt werden und alle Übergangsradien der Hauptlagerzapfen unter einem zweiten Schlagwinkel schlagverfestigt werden, wobei der erste und der zweite Schlagwinkel entsprechend der jeweils höchstbelasteten Stellen bzw. dem Verlauf des Beanspruchungsmaximums optimiert sind.

In einer alternativen Ausgestaltung der Erfindung kann vorgesehen sein, dass wenigstens zwei Übergangsradien zwischen den Pleuellagerzapfen und den Kurbelwangen unter einem unterschiedlichen Schlagwinkel schlagverfestigt werden und/oder dass wenigstens zwei Übergangsradien zwischen den Hauptlagerzapfen und den Kurbelwangen unter einem unterschiedlichen Schlagwinkel schlagverfestigt werden und/oder dass wenigstens ein Übergangsradius zwischen dem Pleuellagerzapfen und den Kurbelwangen unter einem anderen Schlagwinkel schlagverfestigt wird, als ein Übergangsradius zwischen den Hauptlagerzapfen und den Kurbelwangen.

Die Schlagwinkel können somit individuell für jeden Übergangsradius oder für Gruppen von Übergangsradien festgelegt bzw. optimiert werden.

Beispielsweise können in einer Zapfenstelle gleichzeitig unterschiedliche Schlagwinkel zum Einsatz kommen.

In einer Ausgestaltung der Erfindung kann schließlich auch vorgesehen sein, dass während der Schlagverfestigung eines ringförmig um den Pleuellagerzapfen und/oder den Hauptlagerzapfen umlaufenden Übergangsradius der Schlagwinkel verändert wird.

Dies gilt selbstverständlich auch für Übergänge zu Flanschen, Zapfen und/oder sonstigen geometrischen Querschnittsveränderungen - sowohl für tangierende wie hinterlegte Radien.

Es hat sich gezeigt, dass sich hierdurch eine weitere Erhöhung der Dauerschwingfestigkeit bzw. Biegewechselfestigkeit und/oder Torsionswechselfestigkeit erreichen lässt.

Beispielsweise kann im Bereich des unteren Totpunkts eines Pleuellagerzapfens bzw. im Bereich des höchstbelasteten Punkts eines Hauptlagerzapfens ein anderer Schlagwinkel vorgesehen sein als im restlichen Bereich des Übergangsradius.

Insbesondere wenn vorgesehen ist, dass der Schlagwinkel während dem Schlagverfestigen eines Übergangsradius aktorisch verändert wird, kann eine Steuer- und/oder Regeleinrichtung, vorzugsweise umfassend einen Mikroprozessor, vorgesehen sein, um die entsprechende Aktorik anzusteuern.

Anstelle eines Mikroprozessors kann auch eine beliebig weitere Einrichtung zur Implementierung einer Steuer- und/oder Regeleinrichtung vorgesehen sein, beispielsweise eine oder mehrere Anordnungen diskreter elektrischer Bauteile auf einer Leiterplatte, eine speicherprogrammierbare Steuerung (SPS), eine anwendungsspezifische integrierte Schaltung (ASIC) oder eine sonstige programmierbare Schaltung, beispielsweise auch ein Field Programmable Gate Array (FPGA), eine programmierbare logische Anordnung (PLA) und/oder ein handelsüblicher Computer.

In einer weiteren besonderen Variante der Erfindung kann vorgesehen sein, dass die Kurbelwelle zum Schlagverfestigen mittels einer Antriebseinrichtung zunächst entlang einer Drehrichtung in eine Schlagposition gedreht wird, wobei eine Arretiereinrichtung vorgesehen ist, um die Kurbelwelle in der Schlagposition zu arretieren, wonach durch wenigstens ein Schlagwerkzeug eine Schlagkraft in wenigstens einen Übergangsradius eingebracht wird.

Hierdurch werden (parasitäre) Schubspannungen weitgehend, wenn nicht sogar vollständig, vermieden.

Dadurch, dass die Drehbewegung der Kurbelwelle nicht durch das Schlagwerkzeug selbst, sondern durch die Antriebseinrichtung in der Schlagposition gestoppt wird, sind die Anforderungen an die mechanischen Komponenten der Antriebseinrichtung bzw. möglicherweise sogar die Lebensdauer der Antriebseinrichtung verbessert. Durch die Arretiereinrichtung ist es ferner möglich, die Schlagkraft besonders zielgerichtet in den gewünschten Bereich einzubringen. Dies ist möglich, da sich die Kurbelwelle beim Auftreffen des Schlagwerkzeugs nicht ungewollt entlang oder entgegen der Drehrichtung verdrehen kann.

Durch den Einsatz der Arretiereinrichtung kann also ein hochpräzises Arbeiten bzw. Schlagverfestigen gewährleistet sein. Die Schlagabstände können ganz besonders gezielt und mit geringen Toleranzen umgesetzt werden.

Bei einer Arretiereinrichtung kann es sich um eine Einrichtung handeln, die die Kurbelwelle vorzugsweise kraftschlüssig und/oder formschlüssig arretiert bzw. mit diesem Ziel in den Antriebsstrang bzw. in die Vorrichtung eingreift. Vorzugsweise ist eine kraftschlüssige Arretierung vorgesehen, wonach die Arretierkraft derart gewählt ist, dass ein Verdrehen der Kurbelwelle beim Einbringen der Schlagkraft vermieden oder zumindest unterdrückt wird.

Bei der Arretiereinrichtung kann es sich um eine hydraulisch, pneumatisch und/oder elektrisch betriebene Arretiereinrichtung handeln.

Vorzugsweise weist die Arretiereinrichtung eine oder mehrere Bremsbacken auf, beispielsweise zwei Bremsbacken, drei Bremsbacken, vier Bremsbacken oder mehr Bremsbacken.

Die Arretiereinrichtung wird vorzugsweise an der Werkstückantriebseinheit angebracht. Beispielsweise kann die Arretiereinrichtung an einem Backenfutter bzw. einem Spannflansch, einem Befestigungsflansch bzw. einer Planscheibe der Werkstückantriebseinrichtung oder direkt auf dem Motor bzw. dem Antrieb angeordnet sein.

Mit einer Lageregelung bzw. Positionsregelung kann somit eine Punkt-zu-Punkt-Bewegung der Kurbelwelle erreicht werden. Beispielsweise kann eine Positionssteuerung eingesetzt werden, um die Kurbelwelle schrittweise bzw. getaktet von einer Schlagposition zur nächsten Schlagposition zu drehen. Im einfachsten Fall kann hierfür eine PTP-Steuerung bzw. Punktsteuerung vorgesehen sein.

Die Antriebseinrichtung kann einen Motor, insbesondere einen Elektromotor, umfassen. Bei dem Elektromotor kann es sich grundsätzlich um einen beliebigen Elektromotor, beispielsweise einen Drehstrommotor (insbesondere eine Drehstrom-Asynchronmaschine), einen Wechselstrommotor, einen Gleichstrommotor oder einen Universalmotor, handeln.

Vorzugsweise kann ein Schrittmotor verwendet werden.

Es kann auch eine zweigeteilte Antriebseinrichtung vorgesehen sein, bei der beispielsweise ein Motor an jedem Ende der Kurbelwelle vorgesehen ist, d. h. ein Synchronantrieb bzw. beidseitiger Antrieb der Kurbelwelle.

In einer Ausgestaltung kann vorgesehen sein, dass die Steuerung der Antriebseinrichtung und die Steuerung der Arretiereinrichtung miteinander synchronisiert werden derart, dass die Arretiereinrichtung die Kurbelwelle erst dann arretiert, wenn die Kurbelwelle in der Schlagposition stillsteht.

Die Arretiereinrichtung kann grundsätzlich, bei entsprechender Bauweise, beispielsweise bei einer auf Kraftschluss basierenden Bauweise, auch zum Abbremsen der Drehbewegung der Kurbelwelle verwendet werden. Es ist aber besonders zu bevorzugen, die Arretiereinrichtung lediglich zum Arretieren der Kurbelwelle in der Schlagposition einzusetzen, wodurch die Dynamik bzw. Drehung der Kurbelwelle nur durch die Antriebseinrichtung beeinflusst wird. Das heißt, ein Drehmoment, das zu einer Beschleunigung der Kurbelwelle führt (oder zu einem Abbremsen), sollte vorzugsweise ausschließlich seitens der Antriebseinrichtung eingebracht werden. Beispielsweise können dann die Steuerung der Antriebseinrichtung (z. B. eine Lageregelung) und/oder die Steuerung der Arretiereinrichtung besonders einfach aufgebaut sein. Es kann somit ausreichend sein, durch entsprechendes Zeitmanagement lediglich die Zeitpunkte zu synchronisieren, zu denen Antriebseinrichtung und Arretiereinrichtung auf die Kurbelwelle einwirken. Vorzugsweise wirken die Antriebseinrichtung und die Arretiereinrichtung also nicht gleichzeitig auf die Kurbelwelle ein.

In einer Ausgestaltung kann außerdem vorgesehen sein, dass die Steuerung der Arretiereinrichtung und die Steuerung des wenigstens einen Schlagwerkzeugs miteinander synchronisiert werden derart, dass das wenigstens eine Schlagwerkzeug die Schlagkraft erst dann in den wenigstens einen Übergangsradius der Kurbelwelle einbringt, wenn die Kurbelwelle in der Schlagposition arretiert ist.

Hierdurch können ungewünschte Schubspannungen vollständig vermieden werden.

Grundsätzlich kann das Einbringen der Schlagkraft aber auch bereits beginnen, wenn die Kurbelwelle in der Schlagposition noch nicht vollständig arretiert ist.

Die Synchronisierung der Steuerungen der Antriebseinrichtung, Arretiereinrichtung und/oder des wenigstens einen Schlagwerkzeugs kann auch derart erfolgen, dass sich die Zeitpunkte bzw. Zeitbereiche, in denen die einzelnen Komponenten auf die Kurbelwelle einwirken, zumindest teilweise überlappen. Hierdurch kann eine schnellere Taktung des gesamten Verfahrens erreichbar sein.

In einer Ausgestaltung kann vorgesehen sein, dass die Antriebseinrichtung als Direktantrieb ausgebildet ist.

Vorzugsweise ist eine Antriebseinrichtung ohne Kupplung vorgesehen.

Unter einem Direktantrieb werden vorliegend Antriebe verstanden, bei denen der Motor, vorzugsweise ein Elektromotor, und die antreibende Welle direkt bzw. ohne Übersetzung verbunden bzw. gekoppelt sind. Insbesondere auf ein Getriebe wird verzichtet.

Vorzugsweise kann bei Verwendung der Variante auch auf eine Kupplung, insbesondere eine Rutschkupplung, verzichtet werden. Eine Rutschkupplung, mitunter zum Schonen von Bauteilen, ist beispielsweise in dem Verfahren gemäß der EP 1 716 260 B1 vorgesehen, um beim Zwangsstopp der Kurbelwelle durch das Auftreffen des Schlagkopfes die Antriebseinrichtung bzw. die Vorrichtung nicht zu beschädigen. Eine derartige Beschädigung ist bei dem vorliegend beschriebenen Verfahren ausgeschlossen, wodurch die Rutschkupplung unnötig sein kann.

Hierdurch ist der Aufbau der Antriebseinrichtung ganz besonders einfach und somit wirtschaftlich.

In einer Ausgestaltung kann insbesondere vorgesehen sein, dass die Arretiereinrichtung und die Antriebseinrichtung voneinander separiert angeordnet werden.

Die Arretiereinrichtung ist vorzugsweise nicht als Bremsanordnung innerhalb der Antriebseinrichtung, die beispielsweise für die Positionsregelung erforderlich sein kann, ausgebildet. Üblicherweise ist in einer Antriebseinrichtung, die einen Elektromotor umfasst und über eine Lageregelung bzw. Positionsregelung einen Punkt-zu-Punkt-Betrieb durchführt, ohnehin keine Bremsanordnung vorgesehen, da die Drehmomente durch Spannungs- und/oder Stromregelung des Elektromotors erzeugt werden. Sollte allerdings die Antriebseinrichtung eine herkömmliche Bremseinrichtung umfassen, so kann gegebenenfalls vorgesehen sein, dass die Arretiereinrichtung zusätzlich hierzu vorgesehen und als eine hiervon unabhängige Baugruppe ausgebildet ist.

Grundsätzlich kann die Arretiereinrichtung auch innerhalb der Antriebseinrichtung separiert angeordnet sein. Vorzugsweise handelt es sich auch in diesem Fall um voneinander unabhängige Komponenten, die räumlich separiert und/oder funktionell unabhängig sind.

In einer alternativen Ausgestaltung, die nicht bevorzugt ist, kann eine Bremseinrichtung der Antriebseinrichtung verwendet werden. Hierzu ist diese geeignet auszulegen, damit sich die Kurbelwelle bei Einbringen der Schlagkraft nicht verdreht.

In einer Ausgestaltung kann ferner vorgesehen sein, dass die Arretiereinrichtung die Kurbelwelle mittelbar arretiert, indem die Arretiereinrichtung eine drehbare Befestigungseinrichtung, vorzugsweise einen Befestigungsflansch bzw. einen Spannflansch der Befestigungseinrichtung, an dem bzw. an der die Kurbelwelle festgelegt ist, arretiert.

An Stelle des Befestigungsflansches oder zusätzlich zu dem Befestigungsflansch kann die Befestigungseinrichtung auch eine Planscheibe oder ein sonstiges Spannmittel umfassen.

Insbesondere kann eine Planscheibe mit mehreren Spannbacken, beispielsweise zwei, drei, vier, fünf, sechs oder mehr Spannbacken, vorgesehen sein. Hierdurch können Kurbelwellentypen mit verschiedenen Durchmessern festgelegt werden.

Üblicherweise ist die Kurbelwelle zu deren Bearbeitung über eine Befestigungseinrichtung an einer Antriebswelle drehbar festgelegt.

Um die Kurbelwelle in ihrer Schlagposition zu arretieren, kann die Arretiereinrichtung grundsätzlich an einer beliebigen Position angreifen, die mechanisch mit der Antriebseinrichtung bzw. mit der Kurbelwelle gekoppelt ist. Beispielsweise kann die Arretiereinrichtung an der Kurbelwelle selbst angreifen, innerhalb der Antriebseinrichtung z. B. an der Antriebswelle angreifen, außerhalb der Antriebseinrichtung z. B. an der Antriebswelle angreifen oder besonders bevorzugt an der Befestigungseinrichtung, insbesondere einem Befestigungsflansch oder einer Planscheibe bzw. einem sonstigen Spannmittel, angreifen.

In einer Ausgestaltung kann insbesondere vorgesehen sein, dass die Arretiereinrichtung im Bereich eines Außenumfangs an der Befestigungseinrichtung bzw. an dem Befestigungsflansch bzw. an der Planscheibe bzw. an dem Spannflansch angreift.

Dadurch, dass die Arretiereinrichtung im Bereich eines Außenumfangs einer Scheibe oder Welle angreift, können die anzusetzenden bzw. notwendigen Arretierkräfte geringer ausfallen. Abhängig von der radialen Position der Arretiereinrichtung, bezogen auf die Drehachse der Antriebswelle, wird entsprechend weniger Kraft benötigt, um ein Torsionsmoment zu blocken, je größer der radiale Abstand zu der Drehachse ist. Besonders vorteilhaft ist es dabei, wenn die Arretiereinrichtung erst dann angreift, wenn die Kurbelwelle bereits in der Schlagposition still steht.

Grundsätzlich kann die Arretiereinrichtung auch an mehreren Stellen angreifen. Beispielsweise kann vorgesehen sein, dass die Arretiereinrichtung an jeweils einer geeigneten Stelle im Bereich beider Enden der Kurbelwelle, beispielsweise an dort befindlichen Befestigungsflanschen, angreift.

Es kann auch eine Abstützung in der Art eines Reitstocks vorgesehen sein, um die Kurbelwelle an ihrem von der Antriebseinrichtung abgewandten Ende drehbar abzustützen bzw. festzulegen.

Die Arretiereinrichtung kann dann beispielsweise im Bereich der Antriebseinrichtung bzw. Antriebswelle und/oder im Bereich der Abstützung abgreifen. Vorzugsweise greift die Arretiereinrichtung auch in diesem Fall an der Befestigungseinrichtung, vorzugsweise einem Befestigungsflansch, wie beschrieben, an.

In einer Ausgestaltung kann vorgesehen sein, dass die Arretiereinrichtung ausgebildet ist, um eine Drehung der Kurbelwelle entgegen und/oder in Drehrichtung der Kurbelwelle zu vermeiden.

Insbesondere wenn sich die Schlageindrücke eines Schlagkopfes entlang des ringförmig um den Zapfen umlaufenden jeweiligen Übergangsradius überlappen sollen, d. h. wenn die Schlagpositionen eng beabstandet sind, ist es erforderlich die Schlagkraft hochpräzise und gezielt einzubringen. Ohne die Verwendung einer Arretiereinrichtung ist dies schwierig, da sich die Kurbelwelle beim Einbringen der Schlagkraft von einer Schlagposition in die vorhergehende Schlagposition zumindest teilweise zurückdrehen würde, wenn der Schlagkopf in den Schlageindruck des vorhergehenden Schlages eindringt. Da sich gezeigt hat, dass durch überlappende Schlageindrücke bzw. eng angeordnete und exakt festgelegte Schlagpositionen eine besonders wirksame Erhöhung der Dauerschwingfestigkeit bzw. Biegewechselfestigkeit und Torsionswechselfestigkeit erzeugen lässt, ist die Erfindung in Kombination mit dem Einbringen von eng gesetzten und/oder präzisen Schlagabständen insbesondere derart, dass sich die Schlageindrücke überlappen bzw. überschneiden, besonders vorteilhaft.

In einer Ausgestaltung kann das wenigstens eine Schlagwerkzeug mit einer Periodizität, vorzugsweise mit einer Taktung bzw. Schlagfrequenz von 0,5 Hz bis 30 Hz, besonders bevorzugt mit einer Taktung von 0,5 Hz bis 5 Hz und ganz besonders bevorzugt mit einer Taktung von 0,5 Hz bis 3 Hz, eine Schlagbewegung durchführen bzw. die Schlagkraft einbringen.

Selbstverständlich können auch andere Taktungen, beispielsweise auch Schlagfrequenzen zwischen 0,1 Hz und 50 Hz, vorgesehen sein, die vorgenannten Werte eignen sich jedoch ganz besonders.

Die Schlagdrücke, die von dem Schlagkolben zu der Schlagkraft umgesetzt werden, können ― je nach Betrieb ― zwischen 10 und 300 bar, bevorzugt zwischen 30 und 180 bar, und besonders bevorzugt zwischen 50 und 130 bar, betragen.

Die Temperatur im Bereich des zu bearbeitenden Kurbelwellensegments bzw. Übergangsradius sollte vorzugsweise nicht höher als 65°C liegen; bevorzugt werden Werte zwischen 12°C und 25°C.

Die Erfahrung hat gezeigt, dass Kurbelwellen nach dynamischer Beanspruchung im Motor oder auf dem Prüfstand nicht ausbreitungsfähige Mikrorisse an den Oberflächen bekommen können. Auf die Dauerfestigkeitseigenschaften haben diese Mikrorisse keine Auswirkung, aber sie können das optische Erscheinungsbild stören.

Da die Einbringung von Druckeigenspannung vorzugsweise bis zu einer Tiefe von 15 mm, aber auch noch tiefer erfolgen kann, bedeutet dies, im Oberflächenbereich der Kurbelwelle kann eine Abtragung von einigen Millimetern, zum Beispiel von 0,1 bis 3 mm, vorzugsweise 0,5 mm, erfolgen, ohne dass die Biege- und Torsionswechselfestigkeit oder die Dauerschwingfestigkeit der Kurbelwelle leidet.

Untersuchungen haben gezeigt, dass derartige Maßnahmen die Dauerfestigkeit sogar geringfügig erhöhen können, beispielsweise um bis zu 5%.

Die Abtragung der Oberfläche kann auf verschiedene Weise erfolgen, wie zum Beispiel durch Schleifen, Drehen, Fräsen, Drehfräsen, Schälen oder Polieren.

Die Schlagverfestigung eines Übergangsradius kann auch mehrfach um die Kurbelwelle bzw. den Zapfen umlaufend durchgeführt werden. Es kann also auch vorgesehen sein, Bereiche erfindungsgemäß schlagzuverfestigen, die bereits zuvor erfindungsgemäß schlagverfestigt wurden. Dabei können sich die Bereiche (d. h. der hoch beanspruchte Bereich, der wenig beanspruchte Bereich und/oder die Zwischenbereiche) teilweise überlappen bzw. über einen Winkelabschnitt definiert sein, der größer ist als 360°. Die Bereiche können beispielsweise über einen Winkelabschnitt von 540°, 720°, 900°, 1080° oder mehr definiert sein.

Es kann vorgesehen sein, mit der Schlagverfestigung in den wenig beanspruchten Bereich zu beginnen (oder in einen Zwischenbereich, wenn in dem wenig beanspruchten Bereich keine Schlagverfestigung stattfindet) und die Schlagkraft ausgehend von diesem Bereich in Richtung auf den hoch beanspruchten Bereich zu steigern.

Es kann beispielsweise vorgesehen sein, zunächst mit einer ersten Schlagkraft entlang des ringförmig umlaufenden Übergangsradius um 360° schlagzuverfestigen und anschließend mit einer zweiten Schlagkraft, die auch mit der ersten Schlagkraft identisch sein kann, die Zwischenbereiche und den hoch beanspruchten Bereich schlagzuverfestigen und in einem dritten Umlauf mit einer dritten Schlagkraft, die auch mit der ersten und/oder zweiten Schlagkraft identisch sein kann, den hoch beanspruchten Bereich schlagzuverfestigen. Grundsätzlich kann die Schlagkraft also auch derart z. B. ausgehend von den Zwischenbereichen in Richtung auf den hoch beanspruchten Bereich erhöht werden, dass in den ringförmig umlaufenden Übergangsradius in mehreren Umläufen Schlagkräfte eingebracht werden. Die Schlagkraft kann also auch als Summe mehrerer einzelner Schlagkräfte eingebracht werden.

Offenbart wird auch eine Vorrichtung zur Durchführung eines vorstehend beschriebenen Verfahrens zum Schlagverfestigen von Übergangsradien einer Kurbelwelle, insbesondere von Übergangsradien zwischen Pleuellagerzapfen und Kurbelwangen und/oder Übergangsradien zwischen Hauptlagerzapfen und den Kurbelwangen der Kurbelwelle.

Die Vorrichtung eignet sich auch zur Schlagverfestigung von Übergängen zu Flanschen, Zapfen und sonstigen geometrischen Querschnittsveränderungen - sowohl für tangierende wie hinterlegte Radien.

Merkmale, die bereits im Zusammenhang mit dem erfindungsgemäßen Verfahren beschrieben wurden, sind selbstverständlich auch für die Vorrichtung vorteilhaft umsetzbar - und umgekehrt. Ferner können Vorteile, die bereits im Zusammenhang mit dem erfindungsgemäßen Verfahren genannt wurden, auch auf die erfindungsgemäße Vorrichtung bezogen verstanden werden - und umgekehrt.

Es kann vorgesehen sein, dass zwei Schlagwerkzeuge in einer gemeinsamen Schlageinrichtung verwendet werden, die Schlagkräfte in beide Übergangsradien eines Pleuellagerzapfens oder eines Hauptlagerzapfens gleichzeitig einbringen. Die Schlagwerkzeuge können über eine Umlenkeinheit gekoppelt sein und somit vorzugsweise von einem gemeinsamen Schlagkolben betrieben werden.

Es können auch mehrere unabhängig voneinander verwendbare Schlagwerkzeuge (beispielsweise durch Verwenden mehrere Schlageinrichtungen mit jeweils einem oder mehreren Schlagwerkzeugen) vorgesehen sein, die eine jeweilige Schlagkraft in beliebige Übergangsradien der Kurbelwelle einzubringen vermögen, wobei eine entsprechende Synchronisierung untereinander bzw. zwischen den Steuerungen der Antriebseinrichtung und/oder Arretiereinrichtung und/oder weiterer Schlagwerkzeuge vorgesehen sein kann.

Es kann auch vorgesehen sein, dass lediglich ein Schlagwerkzeug verwendet wird.

In einer Ausgestaltung der Vorrichtung kann vorgesehen sein, dass die Antriebseinrichtung und die Arretiereinrichtung voneinander separiert ausgebildet und angeordnet sind.

In einer Ausgestaltung kann ferner eine drehbare Befestigungseinrichtung vorgesehen sein, um die Kurbelwelle festzulegen, wobei die Arretiereinrichtung angeordnet und ausgebildet ist, um die Befestigungseinrichtung für die Kurbelwelle zu arretieren.

In einer Ausgestaltung der Vorrichtung kann des Weiteren vorgesehen sein, dass die Befestigungseinrichtung einen Befestigungsflansch aufweist, welcher durch die Arretiereinrichtung arretierbar ist, vorzugsweise derart, dass die Arretiereinrichtung im Bereich eines Außenumfangs an dem Befestigungsflansch angreift.

In einer Ausgestaltung kann auch vorgesehen sein, dass die Antriebseinrichtung angeordnet und ausgebildet ist, um die Befestigungseinrichtung zu drehen, vorzugsweise um eine Eingangswelle der Befestigungseinrichtung zu drehen. Bei der Eingangswelle der Befestigungseinrichtung kann es sich um eine Ausgangswelle der Antriebeinrichtung, z. B. eines Elektromotors, handeln.

Die Befestigungseinrichtung kann vorzugsweise zwischen einer Ausgangswelle der Antriebseinrichtung und der Kurbelwelle angeordnet sein.

In einer Ausgestaltung der Vorrichtung kann eine Steuer- und/oder Regeleinrichtung, vorzugsweise umfassend einen Mikroprozessor, vorgesehen sein, um die Drehbewegung der Antriebseinrichtung und/oder die Steuerung der Arretiereinrichtung und/oder die Steuerung des wenigstens einen Schlagwerkzeugs zu realisieren und/oder zu synchronisieren.

Es kann eine Steuer- und/oder Regeleinrichtung vorgesehen sein, die die Steuerungen der Arretiereinrichtung, der Antriebseinrichtung und/oder des wenigstens einen Schlagwerkzeugs umfasst.

Anstelle eines Mikroprozessors kann auch eine beliebig weitere Einrichtung zur Implementierung einer Steuer- und/oder Regeleinrichtung vorgesehen sein, beispielsweise eine oder mehrere Anordnungen diskreter elektrischer Bauteile auf einer Leiterplatte, eine speicherprogrammierbare Steuerung (SPS), eine anwendungsspezifische integrierte Schaltung (ASIC) oder eine sonstige programmierbare Schaltung, beispielsweise auch ein Field Programmable Gate Array (FPGA), eine programmierbare logische Anordnung (PLA) und/oder ein handelsüblicher Computer.

Offenbart wird auch ein Computerprogramm mit Programmcodemitteln, um das erfindungsgemäße Verfahren durchzuführen, wenn das Programm auf einer Steuer- und/oder Regeleinrichtung, insbesondere auf einem Mikroprozessor, ausgeführt wird.

Einige der Komponenten der erfindungsgemäßen Vorrichtung können grundsätzlich in ihrem Aufbau der Vorrichtung nach der EP 1 716 260 B1 entsprechen.

Die Erfindung betrifft außerdem eine Kurbelwelle, hergestellt nach einem vorstehend beschriebenen Verfahren.

Die erfindungsgemäße Kurbelwelle unterscheidet sich von herkömmlichen Kurbelwellen insbesondere dadurch, dass zu deren Verfestigung Schlagkräfte in wenigstens einen der Übergangsradien entlang des ringförmig umlaufenden jeweiligen Übergangsradius in verschiedenen Intensitäten bereichsweise eingebracht wurde. Ferner kann sich die erfindungsgemäße Kurbelwelle von herkömmlichen Kurbelwellen unterscheiden, da zu deren Verfestigung gegebenenfalls mehr als ein Schlagwinkel verwendet wurde, wodurch sich insgesamt eine charakteristische Verfestigung der Übergangsradien der Kurbelwelle ergibt.

Nachfolgend werden Ausführungsbeispiele der Erfindung anhand der Zeichnung näher beschrieben.

Die Figuren zeigen jeweils bevorzugte Ausführungsbeispiele, in denen einzelne Merkmale der vorliegenden Erfindung in Kombination miteinander dargestellt sind.

In den Figuren sind funktionsgleiche Elemente mit denselben Bezugszeichen versehen.

### Es zeigen schematisch:

- Fig. 1: eine Gesamtansicht einer Vorrichtung zur Durchführung des Verfahrens in einer ersten Ausführung;
- Fig. 2: eine perspektivische Ansicht eines Teils der Vorrichtung zur Durchführung des Verfahrens in einer zweiten Ausführung;
- Fig. 3: eine Schlageinrichtung mit zwei Schlagwerkzeugen in vergrößerter Darstellung gemäß Einzelheit "A" aus Fig. 1;
- Fig. 4: eine Schlageinrichtung mit nur einem Schlagwerkzeug;
- Fig. 5: einen beispielhaften Ausschnitt einer Kurbelwelle;
- Fig. 6: einen Schnitt durch die Kurbelwelle der Fig. 5 nach der Schnittlinie VI;
- Fig. 7: eine beispielhafte Einteilung eines ringförmig umlaufenden Übergangsradius in einen hoch beanspruchten Bereich, einen wenig beanspruchten Bereich und dazwischen liegende Zwischenbereiche eines beispielhaften Zapfens;
- Fig. 8: eine beispielhafte Verteilung von Schlagkräften entlang eines ringförmig um einen Zapfen umlaufenden Übergangsradius in einer ersten Ausführungsform;
- Fig. 9: eine beispielhafte Verteilung von Schlagkräften entlang eines ringförmig um einen Zapfen umlaufenden Übergangsradius in einer zweiten Ausführungsform;
- Fig. 10: eine beispielhafte Verteilung von Schlagkräften entlang eines ringförmig um einen Zapfen umlaufenden Übergangsradius in einer dritten Ausführungsform;
- Fig. 11: eine beispielhafte Verteilung von Schlagkräften entlang eines ringförmig um einen Zapfen umlaufenden Übergangsradius in einer vierten Ausführungsform;
- Fig. 12: eine Schlageinrichtung mit zwei teleskopierbaren Schlagwerkzeugen;
- Fig. 13: eine vergrößerte Darstellung eines Übergangsradius und eines Schlagwerkzeugs mit einem Schlagkopf, wobei das Schlagwerkzeug auf einen ersten Schlagwinkel ausgerichtet ist;
- Fig. 14: eine vergrößerte Darstellung eines Übergangsradius und eines Schlagwerkzeugs mit einem Schlagkopf, wobei das Schlagwerkzeug auf einen zweiten Schlagwinkel ausgerichtet ist;
- Fig. 15: einen schlagverfestigten Übergangsradius, bei dem sich Schlageindrücke eines Schlagkopfes entlang des ringförmig umlaufenden Übergangsradius überlappen;
- Fig. 16: einen schlagverfestigten Übergangsradius, bei dem ein erster Schlagwinkel zur Schlagverfestigung verwendet wurde;
- Fig. 17: einen schlagverfestigten Übergangsradius, bei dem ein zweiter Schlagwinkel zur Schlagverfestigung verwendet wurde;
- Fig. 18: einen schlagverfestigten Übergangsradius, bei dem der Schlagwinkel während der Schlagverfestigung entlang des ringförmig umlaufenden Übergangsradius variiert wurde; und
- Fig. 19: einen Ablaufplan bei Verwendung einer Arretiereinrichtung.

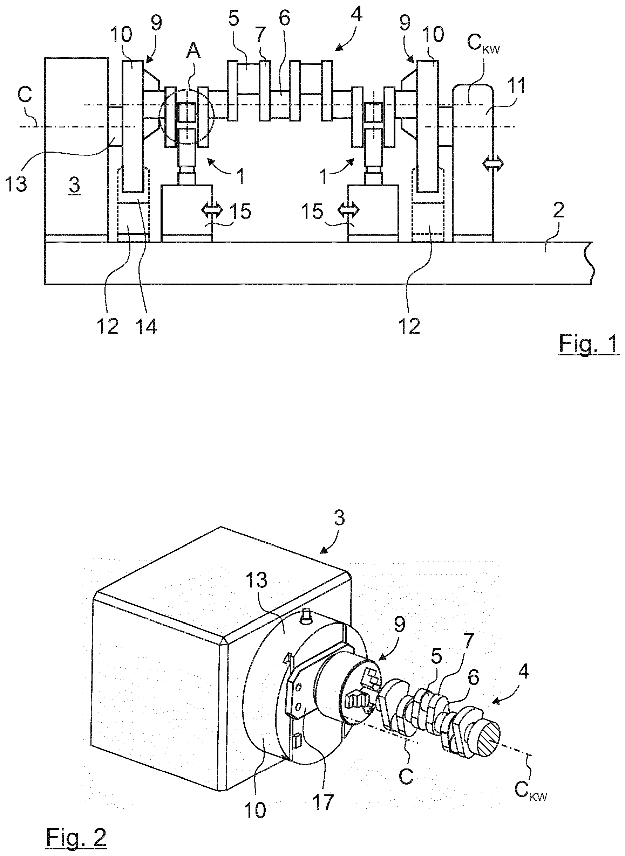

Die in Figur 1 in einer Gesamtansicht dargestellte Vorrichtung entspricht grundsätzlich in ihrem Aufbau den Vorrichtungen nach der DE 34 38 742 C2 und EP 1 716 260 B1 mit einer oder mehreren Schlageinrichtungen 1, weshalb nachfolgend nur auf die wesentlichen Teile und auf die Unterschiede zum Stand der Technik näher eingegangen wird.

Die Vorrichtung weist ein Maschinenbett 2 und eine Antriebseinrichtung 3 auf. Die Antriebseinrichtung 3 wird dazu verwendet, eine Kurbelwelle 4 entlang einer Drehrichtung in eine Schlagposition zu bringen bzw. zu drehen.

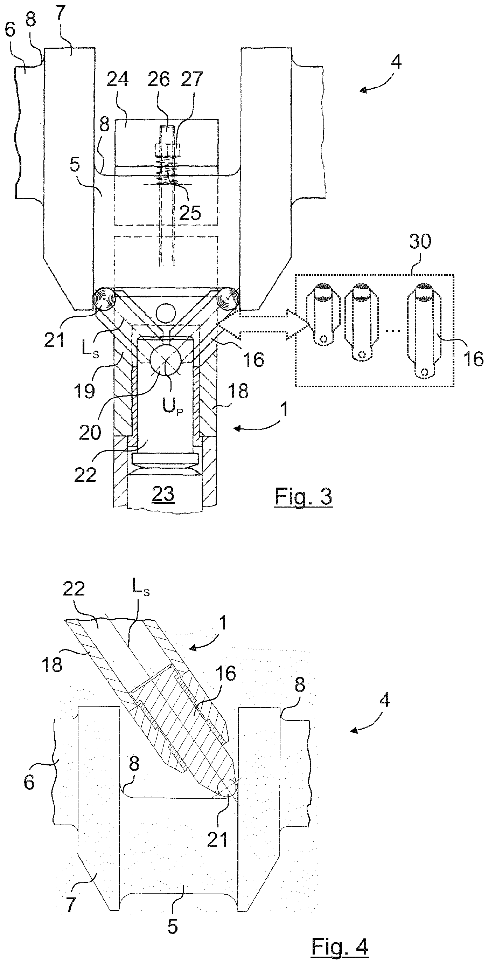

Die Kurbelwelle 4 weist Pleuellagerzapfen 5 und Hauptlagerzapfen 6, zwischen denen jeweils Kurbelwangen 7 angeordnet sind, auf. Zwischen Pleuellagerzapfen 5 und Kurbelwangen 7 sowie zwischen Hauptlagerzapfen 6 und Kurbelwangen 7 bzw. allgemein zwischen Querschnittsübergängen der Kurbelwelle 4 sind Übergangsradien 8 (vgl. Figuren 3 bis 5 und 13 bis 18) ausgebildet.

An der der Antriebseinrichtung 3 zugewandten Seite der Kurbelwelle 4 ist eine Befestigungseinrichtung 9 vorgesehen, die eine Spannscheibe bzw. einen Befestigungsflansch 10 aufweist. Auf der der Antriebseinrichtung 3 abgewandten Seite der Kurbelwelle 4 ist eine Abstützung 11 vorzugsweise in der Art eines Reitstocks vorgesehen, die eine weitere Befestigungseinrichtung 9 aufweist, um die Kurbelwelle 4 drehbar aufzunehmen bzw. drehbar festzulegen. Optional oder ergänzend zur Abstützung 11 kann eine Lünette, die an einer rotationssymmetrischen Stelle positioniert wird, vorgesehen sein.

Ferner kann eine Arretiereinrichtung 12 vorgesehen sein, die im Bereich eines Außenumfangs der Befestigungseinrichtung 9 angreift. Dies ist in Figur 1 gestrichelt dargestellt. Grundsätzlich kann die Arretiereinrichtung 12 an einer beliebigen Stelle innerhalb der Vorrichtung angeordnet sein, um eine Arretierkraft auf eine Ausgangswelle der Antriebseinrichtung 3 bzw. eine vorliegend hiermit identische Eingangswelle 13 der Befestigungseinrichtung 9 und somit auf die Kurbelwelle 4 aufzubringen. Die Arretiereinrichtung 12 kann auch an mehreren Stellen der Vorrichtung angreifen. Beispielhaft ist ein zweiter Teil der Arretiereinrichtung 12 in Eingriff mit der Befestigungseinrichtung 9 im Bereich der Abstützung 11 ebenfalls gestrichelt dargestellt.

Die Arretiereinrichtung 12 basiert beispielsweise auf einer kraftschlüssigen Arretierung unter Verwendung einer nur schematisch dargestellten Bremsbackenanordnung 14.

Die Antriebseinrichtung 3 vermag die Kurbelwelle 4 entlang einer Drehachse C in eine Drehbewegung zu versetzen. Dabei kann vorgesehen sein, dass die Hauptdrehachse C_{KW} der Kurbelwelle 4 außermittig von der Drehachse C der Antriebseinrichtung 3 positioniert ist, wie in Figur 1 und Figur 2 dargestellt. Hierzu können vorzugsweise Ausrichtungsmittel 17 (vgl. Figur 2) im Bereich der Befestigungseinrichtung 9 vorgesehen sein. Dabei kann vorgesehen sein, dass die Ausrichtungsmittel 17 eine Mittelachse des jeweils zu verfestigenden Zapfens 5, 6 so verschieben, dass die Mittelachse des Zapfens 5, 6 auf der Drehachse C liegt.

Für die Antriebseinrichtung 3 kann ein Direktantrieb, vorzugsweise ohne Kupplung, vorgesehen sein. Ein Motor, vorzugsweise ein Elektromotor, der Antriebseinrichtung 3 kann somit ohne Übersetzung bzw. Getriebe mit der Befestigungseinrichtung 9 bzw. mit der Kurbelwelle 4 mechanisch gekoppelt sein.

Die nachfolgend noch beispielhaft näher beschriebenen Schlageinrichtungen 1 sind jeweils in einer Verschiebe- und Justiereinrichtung 15 justierbar gehalten, um sie an die Lage der Pleuellagerzapfen 5 und der Hauptlagerzapfen 6 und an die Länge der Kurbelwelle 4 anzupassen.

Auch die Abstützung 11 kann verschiebbar eingerichtet sein, wie durch die Doppelpfeile in Figur 1 angedeutet.

In der Figur 1 sind zwei Schlageinrichtungen 1 dargestellt, grundsätzlich kann aber eine beliebige Anzahl von Schlageinrichtungen 1 vorgesehen sein, beispielsweise auch nur eine einzige Schlageinrichtung 1.

Es kann auch vorgesehen sein, dass wenigstens eine Schlageinrichtung 1 zur Schlagverfestigung der Übergangsradien 8 der Hauptlagerzapfen 6 ausgebildet und eingerichtet ist und eine Schlageinrichtung 1 zum Schlagverfestigen der Übergangsradien 8 der Pleuellagerzapfen ausgebildet und eingerichtet ist.

In Figur 2 ist in perspektivischer Ansicht ausschnittsweise eine weitere Vorrichtung zur Durchführung des erfindungsgemäßen Verfahrens ― allerdings ohne Schlageinrichtung ― dargestellt. Die Vorrichtung der Figur 2 ist dabei im Wesentlichen identisch mit der Vorrichtung der Figur 1, weshalb nachfolgend nur auf die wesentlichen Unterschiede im Detail Bezug genommen wird.

Abermals ist eine Antriebseinrichtung 3 vorgesehen. Ferner ist eine Befestigungseinrichtung 9 vorgesehen, die einen Befestigungsflansch 10 und eine daran befestigte Planscheibe mit Spannbacken zur Festlegung der Kurbelwelle 4 aufweist. Die Planscheibe mit den Spannbacken der Befestigungseinrichtung 9 ist an dem Befestigungsflansch 10 verstellbar an einem Ausrichtungsmittel 17 angeordnet, wodurch sich die Längsachse C_{KW} der Kurbelwelle 4 relativ zu der Drehachse C einer Antriebswelle bzw. einer Eingangswelle 13 verschieben lässt.

Die Kurbelwelle 4 der Figur 2 weist eine von der in Figur 1 dargestellten Ausführungsform abweichende Konfiguration auf, umfasst aber grundsätzlich ebenfalls Pleuellagerzapfen 5, Hauptlagerzapfen 6 und Kurbelwangen 7.

In Figur 2 (wie auch in Figur 1) kann an dem von der Antriebseinrichtung 3 abgewandten Ende der Kurbelwelle 4 eine weitere Befestigungseinrichtung 9 vorgesehen sein, diese kann jedoch auch entfallen.

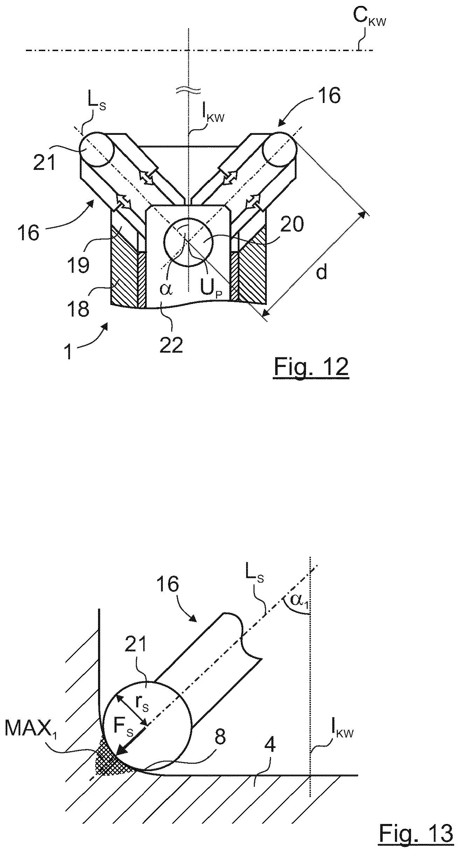

In Figur 3 ist beispielhaft eine Schlageinrichtung 1 der Figur 1 näher dargestellt. Die Erfindung kann grundsätzlich mit einer beliebigen Schlageinrichtung 1 umgesetzt werden. Die nachfolgend beschriebene Schlageinrichtung 1 eignet sich jedoch besonders. Sie weist einen Grundkörper 18 auf, der entsprechend dem Radius des zu bearbeitenden Kurbelwellensegments mit einer prismatischen Anlage versehen sein kann und vorzugsweise Führungen 19 aufweist, die zwei Schlagwerkzeuge 16 in deren Abstützebene führen und ihnen im Abstützwinkel bzw. Schlagwinkel α (vgl. Figuren 12 bis 14) um eine Umlenkeinheit 20 eine entsprechende Freiheit geben, die zur Anpassung an die maßlichen Verhältnisse der Kurbelwelle 4 vorteilhaft ist. An den vorderen Enden der beiden Schlagwerkzeuge 16 ist jeweils eine Kugel als Schlagkopf 21 angeordnet. Ein Zwischenteil 22 stellt die Verbindung zwischen einem Schlagkolben 23 und der Umlenkeinheit 20, die die Schlagenergie an die Schlagwerkzeuge 16 weitergibt, her. Das Zwischenteil 22 kann gegebenenfalls auch entfallen.

Zur Steigerung der Wirksamkeit des Schlages kann auf der von dem Grundkörper 18 abgewandten Seite des Zapfens 5, 6 ein Spannprisma 24 über Federn 25 mit einstellbaren Spannbolzen 26 mit Spannmuttern 27 befestigt werden. Hier sind auch andere konstruktive Lösungen möglich.

Es sei klargestellt, dass, sollte in einem Teil der Beschreibung "ein Schlagkopf/Schlagwerkzeug" bzw. "eine Schlageinrichtung" oder "mehrere Schlagköpfe/Schlagwerkzeuge/Schlageinrichtungen" erwähnt werden, grundsätzlich eine beliebige Anzahl an Schlagköpfen/Schlagwerkzeugen/Schlageinrichtungen gemeint sein kann, beispielsweise zwei, drei, vier, fünf, sechs, sieben, acht, neun, zehn oder mehr. Die Bezugnahme auf eine Pluralform oder Einzahl ist lediglich zur besseren Lesbarkeit vorgesehen und nicht einschränkend.

Durch Anordnung mehrerer Schlageinrichtungen 1 über die Länge der zu bearbeitenden Kurbelwelle 4 können im Bedarfsfall alle zentrisch und gegebenenfalls exzentrisch verlaufenden Bereiche der Kurbelwelle 4 gleichzeitig bearbeitet werden.

Der Schlagkolben 23 überträgt über die Umlenkeinheit 20 einen Kraftstoß auf die Schlagwerkzeuge 16, wonach die Schlagköpfe 21 der Schlagwerkzeuge 16 unter einem Schlagwinkel α eine Schlagkraft F_{S} in die Übergangsradien 8 einbringen. Dabei kann vorgesehen sein, dass der Abstand d (vgl. Figur 12) zwischen dem Umlenkpunkt U_{P} der Umlenkeinheit 20 und dem vorderen Ende des jeweiligen Schlagkopfes 21 der Schlagwerkzeuge 16 einstellbar ist.

Der Ausdruck "F_{S}" und vergleichbare Ausdrücke in der vorliegenden Beschreibung sind nur als Platzhalter/Variablen für eine beliebige, dem Fachmann als angebracht erscheinende Schlagkraft zu verstehen. Wenn dabei in der Beschreibung auf "die Schlagkraft F_{S}" Bezug genommen wird, kann es sich somit jeweils um unterschiedliche oder aber auch um identische Schlagkräfte handeln.

Aus der Figur 4 ist eine Schlageinrichtung 1 ersichtlich, die mit nur einem Schlagwerkzeug 16 versehen ist. In dem gezeigten Ausführungsbeispiel ist die Schlageinrichtung 1 zur Kurbelwelle 4 vorzugsweise schräg gestellt, und zwar derart, dass das Schlagwerkzeug 16, das koaxial zur Längsachse der Schlageinrichtung 1 angeordnet ist, senkrecht auf den Bereich des zu bearbeitenden Kurbelwellensegments, vorliegend des zu bearbeitenden Übergangsradius 8, auftrifft. In diesem Fall lässt sich zwar jeweils nur ein Kurbelwellensegment bearbeiten, aber andererseits ist die konstruktive Ausgestaltung und die Kraftübertragung der Schlageinrichtung 1 hierfür besser und einfacher. Zusätzlich können Bohrungsenden mit diesem Werkzeug stehend verfestigt werden.

Besonders vorteilhaft erweist sich diese Ausgestaltung für die Anwendung an nicht symmetrischen Kurbelwellensegmenten, wie den Endbereichen und den Ölbohrungsenden der Kurbelwelle 4.

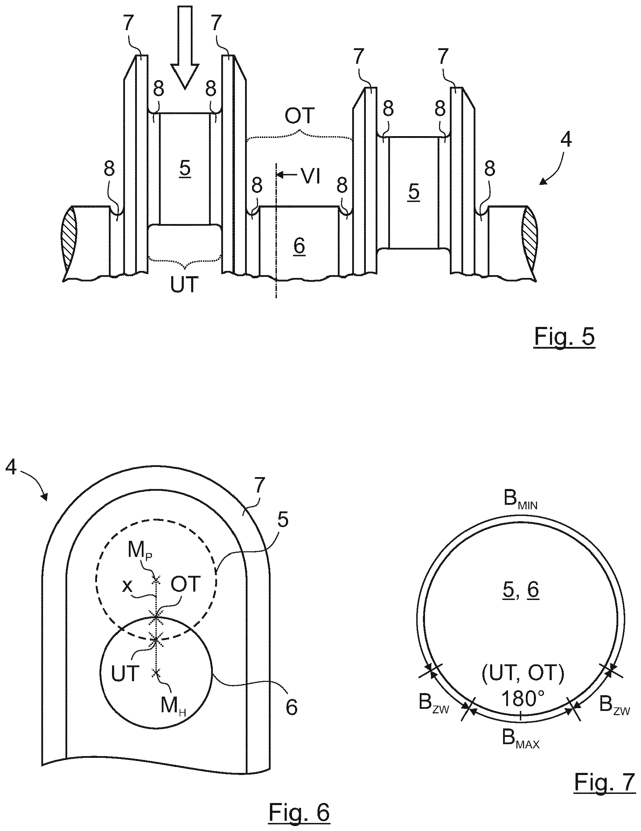

In Figur 5 ist ein beispielhafter Ausschnitt einer Kurbelwelle 4 mit jeweiligen Übergangsradien 8 zwischen Pleuellagerzapfen 5 und Kurbelwange 7 bzw. Hauptlagerzapfen 6 und Kurbelwangen 7 dargestellt.

Erfindungsgemäß ist vorgesehen, dass zum Einbringen der Schlagkraft F_{S} in wenigstens einen der Übergangsradien 8 entlang des ringförmig (um den Pleuellagerzapfen 5 und/oder Hauptlagerzapfen 6) umlaufenden jeweiligen Übergangsradius 8 ein hoch beanspruchter Bereich B_{MAX}, ein wenig beanspruchter Bereich B_{MIN} und dazwischen liegende Zwischenbereiche B_{ZW} definiert werden, wonach derart schlagverfestigt wird, dass die in die Zwischenbereiche B_{ZW} eingebrachte Schlagkraft F_{S} in Richtung auf den hoch beanspruchten Bereich B_{MAX} erhöht wird.

Dabei kann vorgesehen sein, dass die Schlagkraft F_{S}, die beim Schlagverfestigen in den hoch beanspruchten Bereich B_{MAX} eingebracht wird, anhand der gewünschten Dauerfestigkeit der Kurbelwelle 4 und/oder der gewünschten Dauerfestigkeit von Abschnitten der Kurbelwelle 4 bestimmt wird.

In Abhängigkeit des Motorenbetriebs bzw. Einsatzzwecks der Kurbelwelle 4 können die jeweils an die Zapfen 5, 6 angrenzenden Übergangsradien 8 hoch beanspruchte Bereiche B_{MAX} aufweisen, die sich jeweils an unterschiedlichen Positionen befinden. Eine beispielhafte Belastung der Kurbelwelle 4 ist in Figur 5 durch einen Pfeil dargestellt. Der Pleuellagerzapfen 5 ist entlang des Pfeils über einen nicht dargestellten Kolben mit dem Motor verbunden. Bei der Seite des Pleuellagerzapfens 5, auf die der Pfeil zeigt, handelt es sich dabei um die sogenannte Druckseite. Auf der der Druckseite entgegengesetzten Seite, nämlich der Zugseite, befindet sich der sogenannte untere Totpunkt UT des Pleuellagerzapfens 5. Am unteren Totpunkt UT des Pleuellagerzapfens 5 ist die Belastung auf Biegung der jeweiligen Übergangsradien 8 erfahrungsgemäß am höchsten. In vorteilhafter Weise kann der hoch beanspruchte Bereich B_{MAX} an den unteren Totpunkt UT angrenzend definiert werden, vorzugsweise diesen symmetrisch umgeben.

Bei der in Figur 5 dargestellten Kurbelwelle 4 kann ferner ein höchstbelasteter Punkt des an den Pleuellagerzapfen 5 angrenzenden Hauptlagerzapfens 6 ein Bereich sein, der der Druckseite des angrenzenden Pleuellagerzapfens 5 entspricht. Zur Vereinfachung wird dieser Bereich eines Hauptlagerzapfens 6 nachfolgend als "oberer Totpunkt" OT bezeichnet.

Zur besseren Verdeutlichung der Positionen der Totpunkte UT, OT ist in Figur 6 ein prinzipmäßiger Schnitt durch die Kurbelwelle 4 entlang der dargestellten Schnittlinie "VI" der Figur 5 gezeigt.

Dabei ist ersichtlich, dass der höchstbelastete Punkt bzw. der obere Totpunkt OT eines Übergangsradius 8 eines Hauptlagerzapfens 6 im Querschnitt der Kurbelwelle 4 auf dem Schnittpunkt des Übergangsradius 8 des Hauptlagerzapfens 6 mit der Verbindungslinie x der Mittelpunkte M_{H}, M_{P} des Hauptlagerzapfens 6 und des an den Übergangsradius 8 des Hauptlagerzapfens 6 angrenzenden Pleuellagerzapfens 5 liegt.

Figur 7 zeigt einen Schnitt durch einen beispielhaften Zapfen 5, 6, um die mögliche Verteilung der Bereiche B_{MAX}, B_{MIN}, B_{ZW} entlang des Umfangs des Zapfens 5, 6 darzustellen.

Vorliegend wird der höchstbelastete Punkt des Zapfens 5, 6, d. h. der untere Totpunkt UT eines Pleuellagerzapfens 5 oder der obere Totpunkt OT eines Hauptlagerzapfens 6 mit 180° bezeichnet. Ausgehend von diesem Punkt ist der hoch beanspruchte Bereich B_{MAX} entlang des ringförmig um die Kurbelwelle 4 umlaufenden Übergangsradius 8 definiert. Der hoch beanspruchte Bereich B_{MAX} kann, ausgehend von diesem Punkt vorzugsweise symmetrisch, wenigstens ± 20°, vorzugsweise wenigstens ± 30°, weiter bevorzugt wenigstens ± 40°, besonders bevorzugt wenigstens ± 50°, ganz besonders bevorzugt wenigstens ± 60°, beispielsweise wenigstens ± 70°, wenigstens ± 80° oder wenigstens ± 90° betragen.

Angrenzend an den hoch beanspruchten Bereich B_{MAX} sind zwei Zwischenbereiche B_{ZW} definiert, die den hoch beanspruchten Bereich B_{MAX} von dem wenig beanspruchten Bereich B_{MIN} trennen. Die Zwischenbereiche B_{ZW} können entlang des ringförmig umlaufenden Übergangsradius 8 einen beliebigen Winkelabschnitt umfassen. Selbiges gilt für den wenig beanspruchten Bereich B_{MIN}. Die jeweiligen Winkelbereiche können durch Berechnungen, Simulation und/oder Versuchsreihen, ggf. auch aus Messungen im Echtzeitbetrieb (des Motors), bestimmt werden.

Vorzugsweise wird die in die Zwischenbereiche B_{ZW} eingebrachte Schlagkraft F_{S} (vorzugsweise stetig) in Richtung auf den hoch beanspruchten Bereich B_{MAX} erhöht. Damit, dass die Schlagkraft F_{S} erhöht wird, ist gemeint, dass die Schlagkraft F_{S} zwischen aufeinanderfolgenden Schlägen vorzugsweise immer weiter erhöht wird.

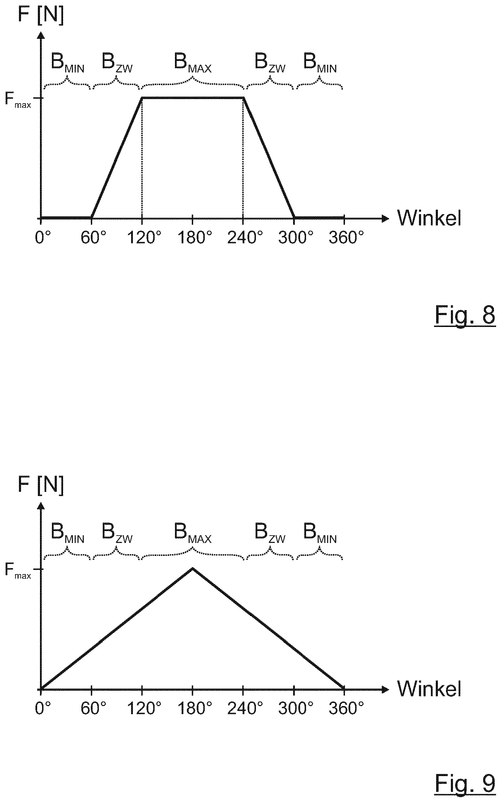

In den Figuren 8 bis 11 sind vier beispielhafte Verläufe der Schlagkraft F_{S} entlang des Umfangs eines Zapfens 5, 6, beispielsweise des Zapfens 5, 6 aus Figur 7, dargestellt.

Dabei ist in den Figuren 8, 10 und 11 die Schlagkraft F_{S}, die beim Schlagverfestigen in den jeweiligen hoch beanspruchten Bereich B_{MAX} eingebracht wird, konstant.

In allen beispielhaft dargestellten Kurven ist die in den hoch beanspruchten Bereichen B_{MAX} beim Schlagverfestigen eingebrachte Schlagkraft F_{S} größer oder zumindest gleich groß wie die jeweilige größte Schlagkraft F_{S}, die in die Zwischenbereiche B_{ZW} eingebracht wird (und natürlich jeweils größer als die Schlagkraft F_{S}, die in den wenig beanspruchten Bereich B_{MIN} eingebracht wird).

Die maximale Schlagkraft F_{MAX} wird somit im hoch beanspruchten Bereich B_{MAX} des Übergangsradius 8 eingebracht.

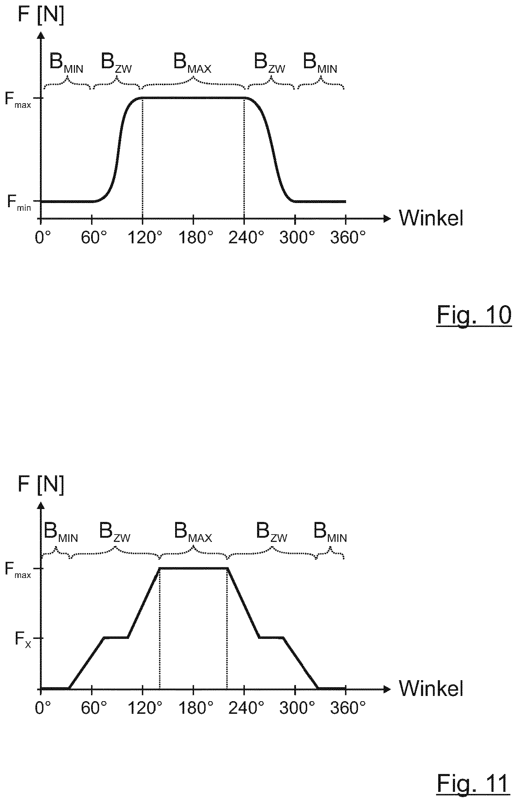

Ferner wird in den Figuren 8 und 11 eine beispielhafte Kräfteaufteilung gezeigt, bei der jeweils in den wenig beanspruchten Bereich B_{MIN} beim Schlagverfestigen keine Schlagkraft F_{S} eingebracht wird. In den Figuren 9 und 10 wird hingegen in dem jeweils wenig beanspruchten Bereich B_{MIN} beim Schlagverfestigen eine Schlagkraft F_{S} eingebracht, die geringer ist als die geringste Schlagkraft F_{S}, die in die Zwischenbereiche B_{ZW} eingebracht wird. Im Falle der Figur 10 ist dabei eine Mindestschlagkraft Fₘᵢₙ vorgesehen, die im wenig beanspruchten Bereich B_{MIN} konstant gehalten wird. In Figur 9 hingegen wird die Schlagkraft F_{S} ausgehend von den Zwischenbereichen B_{ZW} auf die dem höchstbelasteten Punkt bzw. dem unteren Totpunkt UT bzw. dem oberen Totpunkt OT entgegenliegende Position stetig linear verringert bis zu einem Minimalwert, vorliegend 0.

In Figur 8 wird die in die Zwischenbereiche B_{ZW} eingebrachte Schlagkraft F_{S} ausgehend von dem wenig beanspruchten Bereich B_{MIN}, in dem vorliegend beispielhaft keine Schlagverfestigung stattfindet, gleichmäßig bzw. linear auf den hoch beanspruchten Bereich B_{MAX} erhöht.

In Figur 9 hingegen folgt der Verlauf der Schlagkraft F_{S} einer durchgängigen Rampe, die ausgehend von einem entlang des Umfangs der Kurbelwelle 4 dem höchstbelasteten Punkt bzw. dem unteren Totpunkt UT bzw. dem oberen Totpunkt OT gegenüberliegenden Punkt jeweils in Richtung des höchstbelasteten Punkts bzw. des unteren Totpunkts UT bzw. des oberen Totpunkts OT ansteigt. Der Verlauf der Schlagkraft F_{S} folgt dabei in den jeweiligen Bereichen B_{MIN}, B_{ZW} und B_{MAX} jeweils einer eigenen Rampenfunktion, die insgesamt die dargestellte Rampe ergeben.

In Figur 10 ist ein Verlauf der Schlagkraft F_{S} dargestellt, der grundsätzlich dem Verlauf der Schlagkraft F_{S} der Figur 8 ähnelt. In den Zwischenbereichen B_{ZW} ist allerdings im Gegensatz zu der in Figur 8 dargestellten linearen bzw. rampenförmigen Veränderung der Schlagkraft F_{S} ein geglätteter Kurvenverlauf dargestellt.

Schließlich zeigt Figur 11 ein Diagramm, bei dem die Schlagkräfte F_{S} in den Zwischenbereichen B_{ZW} in Abstufungen verändert werden.

Schließlich können beliebige Variationen und Kombinationen, insbesondere (aber nicht ausschließlich) der in den Figuren 8 bis 11 dargestellten Verläufe, vorgesehen sein. Die Erfindung ist nicht auf einen bestimmten Verlauf der Schlagkraft F_{S} beschränkt. Ein Verlauf der Schlagkraft F_{S} entlang des Umfangs des ringförmig umlaufenden Übergangsradius 8 kann auch im Hinblick auf den Motorenbetrieb bzw. Einsatzzweck der Kurbelwelle 4 ausgewählt werden.

Es kann vorgesehen sein, dass der Schlagkopf 21 des wenigstens einen Schlagwerkzeugs 16 die Schlagkraft F_{S} unter einem Schlagwinkel α in den Übergangsradius 8 einbringt, wobei die Schlagkraft F_{S} einstellbar ist. Der Schlagwinkel α kann insbesondere dadurch verändert werden, indem der Abstand d zwischen dem Umlenkpunkt U_{P} der Umlenkeinheit 20 und dem vorderen Ende des jeweiligen Schlagkopfes 21 der Schlagwerkzeuge 16 einstellbar ist.

In Figur 3 ist die technische Lösung zur Einstellung des Abstands d schematisiert strichliniert dargestellt. Es kann beispielsweise eine Wechseleinrichtung 30 mit einem Magazin vorgesehen sein, um das wenigstens eine Schlagwerkzeug 16 und/oder den Schlagkopf 21 und/oder die Umlenkeinheit 20 und/oder die wenigstens eine Schlageinrichtung 1 auszutauschen, um den Abstand d zwischen dem Umlenkpunkt U_{P} der Umlenkeinheit 20 und dem vorderen Ende des Schlagkopfes 21 des wenigstens einen Schlagwerkzeugs 16 auf einen anderen Wert einzustellen. In Figur 3 wird eine Wechseleinrichtung 30 zum Austauschen von Schlagwerkzeugen 16 angedeutet. Die Wechseleinrichtung 30 umfasst hierfür eine Auswahl von Schlagwerkzeugen 16 mit jeweils unterschiedlicher Länge. Durch einen Austausch eines Schlagwerkzeugs 16 kann der Abstand d und somit der Schlagwinkel α eingestellt werden.

Es kann auch vorgesehen sein, dass die Länge der Schlagwerkzeuge 16 einstellbar, vorzugsweise teleskopierbar ist. Ein entsprechender Aufbau ist in Figur 12 dargestellt. Figur 12 zeigt dabei einen Ausschnitt einer Schlageinrichtung 1, die im Wesentlichen identisch ausgebildet sein kann, wie in der Ausführungsform der Figur 3.

In Figur 12 sind zwei teleskopierbare Schlagwerkzeuge 16 schematisch dargestellt. Durch die einstellbare Länge der Schlagwerkzeuge 16 ist der Abstand d zwischen dem Umlenkpunkt U_{P} der Umlenkeinheit 20 und dem vorderen Ende eines Schlagkopfes 21 einstellbar. Hierdurch lässt sich also mittelbar auch der Schlagwinkel α und gegebenenfalls auch die Schlagposition beeinflussen.

Es kann auch, wie in Figur 1 dargestellt, vorgesehen sein, mehrere Schlageinrichtungen 1 einzusetzen. Vorzugsweise ist dann der jeweilige Abstand d zwischen dem Umlenkpunkt U_{P} und Schlagköpfen 21 wenigstens bei zwei Schlageinrichtungen 1 nicht identisch. Dies ermöglicht es, die Schlageinrichtungen 1 jeweils zur Schlagverfestigung eines Übergangsradius 8 oder einer Gruppe von Übergangsradien 8 einzusetzen, wobei die Schlagwerkzeuge 16 der jeweiligen Schlageinrichtung 1 jeweils bereits auf den vorzugsweise vorgesehenen Schlagwinkel α eingestellt sind. Ein Umrüsten der Schlageinrichtung 1 ist somit nicht notwendig. Insofern die Kurbelwelle 4 nur Übergangsradien 8 mit zwei verschiedenen vorteilhaften Schlagwinkeln α aufweist, genügen daher vorzugsweise zwei entsprechend voreingestellte Schlageinrichtungen 1.

Es kann z. B. vorgesehen sein, dass eine erste Schlageinrichtung 1 Schlagkräfte F_{S} unter einem ersten Schlagwinkel α₁ und eine zweite Schlageinrichtung 1 Schlagkräfte F_{S} unter einem zweiten Schlagwinkel α₂ einbringt. Es können auch Schlageinrichtungen 1 eingesetzt werden, bei denen der Abstand d bzw. der Schlagwinkel α auf unterschiedliche Weise einstellbar ist. Es kann auch eine herkömmliche Schlageinrichtung mit einer Schlageinrichtung 1 mit einstellbarem Abstand d kombiniert werden.

Es kann vorgesehen sein, dass der Schlagwinkel α zwischen der Längsachse L_{S} des wenigstens einen Schlagwerkzeugs 16 und einem Lot I_{KW} zu der Längsachse C_{KW} der Kurbelwelle 4 5° bis 80°, vorzugsweise 10° bis 70°, weiter bevorzugt 20° bis 60° und besonders bevorzugt 30° bis 55°, insbesondere 35° bis 50°, beträgt.

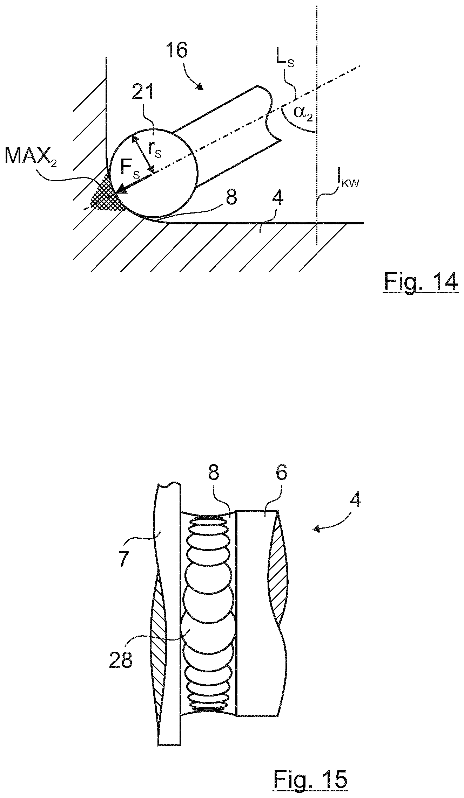

Zur Verdeutlichung der Zusammenhänge sind in den Figuren 13 und 14 Vergrößerungen dargestellt, die stark schematisiert einen Schlagkopf 21 eines Schlagwerkzeugs 16 und einen beispielhaften Übergangsradius 8 einer Kurbelwelle 4 darstellen. Dabei wird im Beispiel der Figur 13 unter einem ersten Schlagwinkel α₁ und in der Figur 14 unter einem zweiten Schlagwinkel α₂ schlagverfestigt.

Durch die entsprechende Einstellung des Schlagwinkels α über die Veränderung des Abstands d zwischen dem Umlenkpunkt U_{P} der Umlenkeinheit 20 und dem Schlagkopf 21 des Schlagwerkzeugs 16 lässt sich die Richtung der Schlagkraft F_{S} vorgeben, wodurch der Bereich größter Wirksamkeit der Schlagverfestigung gezielt einstellbar ist.

Es kann auch vorgesehen sein die Schlagkraft F_{S} gezielt zu reduzieren bzw. die Wirkrichtung zu verändern, wenn z. B. reduzierte Querschnitte, Bohrungen oder andere geometrische Verhältnisse dies erfordern.

Vorzugsweise wird der Schlagwinkel α entsprechend dem Verlauf eines Beanspruchungsmaximums MAX₁, MAX₂ des Übergangsradius 8 gewählt, wonach der Verlauf des Beanspruchungsmaximums MAX₁, MAX₂ auf Basis von Simulationen und/oder Berechnungen und/oder Versuchsreihen des jeweiligen Kurbelwellentyps bestimmt wird.

In Figur 14 ist der Schlagkopf 21 an derselben Position des Übergangsradius 8 positioniert wie bei Figur 13. Allerdings ist der Abstand d zwischen dem Umlenkpunkt U_{P} der Umlenkeinheit 20 und dem Schlagkopf 21 derart eingestellt, dass das Schlagwerkzeug 16 in einem anderen Schlagwinkel α ausgerichtet ist wie in Figur 13. Dadurch ergibt sich, dass der Schlag im Winkel α₂ in den Übergangsradius 8 eingebracht wird, obwohl der Schlagkopf 21 grundsätzlich an der gleichen Position wie in Figur 13 angesetzt ist.

Die Darstellung in Figur 14 weicht zur Verdeutlichung besonders stark von der Darstellung in der Figur 13 ab.

Grundsätzlich kann auch die Positionierung des Schlagkopfes 21 in dem Übergangsradius 8 verändert werden, d. h. der Schlagkopf 21 könnte ggf. auch an einer abweichenden Position entlang des Umfangs des Übergangsradius 8 ansetzen, wobei gleichzeitig der Schlagwinkel α veränderbar sein kann.

Der Schlagkopf 21 kann einen Radius r_{S} aufweisen, dessen Größe 75% bis 99% des Übergangsradius 8, vorzugsweise 85% bis 98% des Übergangsradius 8 und besonders bevorzugt 85% bis 95% des Übergangsradius 8 beträgt. Vorzugsweise entspricht der Radius r_{S} des Schlagkopfes 21 dem Übergangsradius 8 im Wesentlichen.

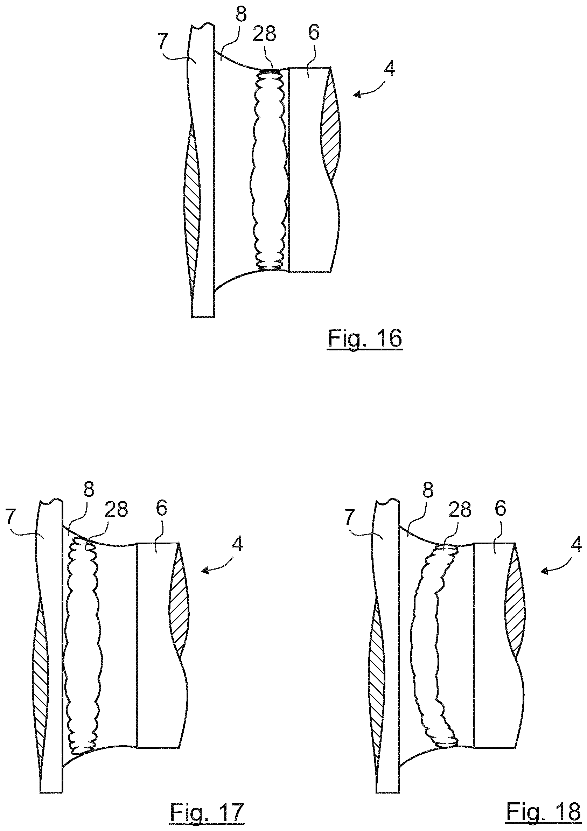

In Figur 15 (und den nachfolgenden Figuren 16 bis 18) ist ein beispielhafter Übergangsradius 8 zwischen einem Hauptlagerzapfen 6 und einer Kurbelwange 7 dargestellt, bei dem die Schlagverfestigung derart erfolgt ist, dass sich die Schlageindrücke 28 eines Schlagkopfes 21 des Schlagwerkzeugs 16 entlang des ringförmig um einen Hauptlagerzapfen 6 umlaufenden Übergangsradius 8 überlappen.

Um diese Art der Schlagverfestigung zu erreichen, ist ein hochpräzises Arbeiten bzw. Betreiben der Vorrichtung notwendig.

Insbesondere wenn die Schlagabstände eng gesetzt werden, dringt der Schlagkopf 21 bei einem nachfolgenden Schlag zumindest teilweise in den Schlageindruck 28 des vorhergehenden Schlages ein, wodurch die Schlagkraft eine rückstellende Drehwirkung auf die Kurbelwelle 4 ausüben kann. Die bereits dargestellte Arretiereinrichtung 12 kann vorgesehen und ausgebildet sein, eine derartige Drehbewegung zu verhindern. Es kann insbesondere von Vorteil sein, dass die Arretiereinrichtung 12 ausgebildet ist, um eine Drehung der Kurbelwelle 4 entgegen der Drehrichtung der Antriebseinrichtung 3 zu vermeiden.

In einer besonderen Variante der Erfindung kann also vorgesehen sein, dass die Kurbelwelle 4 zum Schlagverfestigen von der Antriebseinrichtung 3 zunächst entlang einer Drehrichtung in eine Schlagposition gedreht wird, wobei die Arretiereinrichtung 12 vorgesehen ist, um die Kurbelwelle 4 in der Schlagposition zu arretieren, wonach durch wenigstens ein Schlagwerkzeug 16 eine Schlagkraft F_{S} in wenigstens einen Übergangsradius 8 eingebracht wird.

In den Figuren 16 und 17 sind weitere beispielhafte Übergangsradien 8 zwischen einem Hauptlagerzapfen 6 und einer Kurbelwange 7 dargestellt, bei denen sich die Schlageindrücke 28 eines Schlagkopfes 21 des Schlagwerkzeugs 16 entlang des ringförmig um den Hauptlagerzapfen 6 umlaufenden Übergangsradius 8 überlappen. Wie vorstehend bereits erwähnt, kann der Schlagkopf 21 bei einem nachfolgenden Schlag zumindest teilweise in den Schlageindruck 28 eines vorhergehenden Schlags eindringen, wodurch die in den Figuren dargestellte "Spur" aus Schlageindrücken 28 entsteht. Im Gegensatz zu der Darstellung in Figur 15 ist die Spur der Schlageindrücke 28 in den Figuren 16 bis 18 vereinfacht dargestellt.

Bei den Figuren 16 und 17 ist die Schlagverfestigung unter verschiedenen Schlagwinkeln α erfolgt. Dabei verlaufen die Schlageindrücke 28 zur bildlichen Darstellung deutlich erkennbar auf dem Umfang des Übergangsradius 8 versetzt voneinander.

Tatsächlich ist die Abweichung vorzugsweise nur gering, aber gleichwohl wirksam. Der versetzte Verlauf kann durch einen geänderten Schlagwinkel a, wie in Figur 14 dargestellt und/oder durch einen geänderten Ansatzpunkt des Schlagkopfes 21 erreicht werden. Bei dem Übergangsradius 8 der Figur 16 wurde ein kleinerer Schlagwinkel α gewählt, als bei dem Übergangsradius 8 der Figur 17, d. h. der Abstand d zwischen dem Umlenkpunkt U_{P} der Umlenkeinheit 20 und dem Schlagkopf 21 des Schlagwerkzeugs 16 war bei dem Verfahren gemäß Figur 16 größer eingestellt, als bei dem Übergangsradius 8 der Figur 17. Demnach verlaufen die Schlageindrücke 28 bei dem in Figur 17 dargestellten Übergangsradius 8 weiter oben bzw. näher an der Kurbelwange 7 als dies bei dem Übergangsradius 8 der Figur 16 der Fall ist.

Es kann auch vorgesehen sein, dass der Schlagwinkel α eines Schlagwerkzeugs 16 während der Schlagverfestigung eines Übergangsradius 8 entlang des ringförmig um den Pleuellagerzapfen 5 und/oder Hauptlagerzapfen 6 umlaufenden jeweiligen Übergangsradius 8 verändert wird. Dies ist in Figur 18 dargestellt.

Es kann vorgesehen sein, dass alle Übergangsradien 8 zwischen Pleuellagerzapfen 5 und den Kurbelwangen 7 mit einem ersten Schlagwinkel α und alle Übergangsradien 8 zwischen den Hauptlagerzapfen 6 und den Kurbelwangen 7 unter einem zweiten Schlagwinkel α schlagverfestigt werden.

Alternativ kann vorgesehen sein, dass wenigstens zwei Übergangsradien 8 zwischen den Pleuellagerzapfen 5 und den Kurbelwangen 7 unter einem unterschiedlichen Schlagwinkel α schlagverfestigt werden und/oder dass wenigstens zwei Übergangsradien 8 zwischen den Hauptlagerzapfen 6 und den Kurbelwangen 7 unter einem unterschiedlichen Schlagwinkel α schlagverfestigt werden und/oder dass wenigstens ein Übergangsradius 8 zwischen dem Pleuellagerzapfen 5 und den Kurbelwangen 7 unter einem anderen Schlagwinkel α schlagverfestigt wird als ein Übergangsradius 8 zwischen den Hauptlagerzapfen 6 und den Kurbelwangen 7.

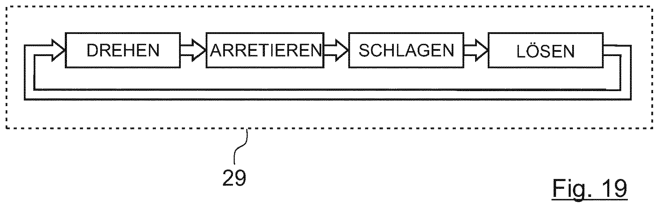

In Figur 19 ist ein Verfahren, dass die besondere Variante mit der Arretiereinrichtung 12 betrifft und das grundsätzlich aus vier Schritten (Drehen, Arretieren, Schlagen, Lösen) besteht, abgebildet.

Für den Betrieb der Antriebseinrichtung 3, die vorzugsweise einen Elektromotor umfasst, kann eine Lageregelung verwendet werden, um die Kurbelwelle 4 in die jeweilige Schlagposition zu drehen, wonach die Kurbelwelle 4 vorzugsweise schrittweise bzw. getaktet gedreht wird.

Nachdem die Kurbelwelle 4 von der Antriebseinrichtung 3 in die Schlagposition gedreht wurde, wird die Kurbelwelle 4 von der Arretiereinrichtung 12 zunächst in der Schlagposition arretiert.

Anschließend wird durch wenigstens ein Schlagwerkzeug 16 eine Schlagkraft F_{S} in wenigstens einen Übergangsradius 8 der Kurbelwelle 4 eingebracht.

Vorzugsweise sind die Steuerung der Antriebseinrichtung 3 und die Steuerung der Arretiereinrichtung 12 miteinander synchronisiert, derart, dass die Arretiereinrichtung 12 die Kurbelwelle 4 erst dann arretiert, wenn die Kurbelwelle 4 in der Schlagposition stillsteht.

Ferner können auch die Steuerungen der Arretiereinrichtung 12 und des wenigstens einen Schlagwerkzeugs 16 (bzw. der wenigstens einen Schlageinrichtung 1) synchronisiert sein, derart, dass das wenigstens eine Schlagwerkzeug 16 die Schlagkraft erst dann in den Übergangsradius 8 der Kurbelwelle 4 einbringt, wenn die Kurbelwelle 4 in der Schlagposition arretiert ist. Anschließend wird die Arretierung der Kurbelwelle 4 wieder gelöst.

Das Verfahren kann anschließend entlang eines Übergangsradius 8 beliebig oft wiederholt werden, vorzugsweise für eine vollständige Umdrehung entlang des Umfangs des Übergangsradius 8 bzw. entlang des ringförmig umlaufenden Übergangsradius 8. Es kann erfindungsgemäß auch vorgesehen sein, dass in dem wenig beanspruchten Bereich B_{MIN} keine Schlagkraft F_{S} eingebracht wird. Es muss keine volle Umdrehung stattfinden. Es kann auch mehr als eine Umdrehung vorgesehen sein, beispielsweise 2 oder 3 Umdrehungen.

Nachdem ein Übergangsradius 8 in gewünschter Weise schlagverfestigt wurde, kann das Schlagwerkzeug 16 bzw. die gesamte Schlageinrichtung 1 an den als nächstes zu verfestigenden Übergangsradius 8 bewegt werden, wonach das Verfahren (Drehen, Arretieren, Schlagen, Lösen) entlang des ringförmig um den Zapfen 5, 6 umlaufenden nächsten Übergangsradius 8 wiederholt werden kann.

Das wenigstens eine Schlagwerkzeug 16 bzw. die wenigstens eine Schlageinrichtung 1 kann die Schlagbewegung bzw. die Schlagkraft F_{S} mit einer Periodizität, beispielsweise mit einer Taktung von 0,1 Hz bis 50 Hz, vorzugsweise mit einer Taktung von 0,3 Hz bis 10 Hz, besonders bevorzugt mit einer Taktung von 0,5 Hz bis 5 Hz und ganz besonders bevorzugt mit einer Taktung von 0,5 Hz bis 3 Hz, einbringen.

Zur Durchführung des Verfahrens kann eine Steuer- und/oder Regeleinrichtung 29, vorzugsweise umfassend einen Mikroprozessor, vorgesehen sein. Die Steuer- und/oder Regeleinrichtung 29 kann beispielsweise auch die Steuerungen der Antriebseinrichtung 3, der Arretiereinrichtung 12 und/oder des wenigstens einen Schlagwerkzeugs 16 umfassen bzw. implementieren und/oder synchronisieren.

Insbesondere kann ein Computerprogramm mit Programmcodemitteln vorgesehen sein, um das erfindungsgemäße Verfahren durchzuführen, wenn das Programm auf einer Steuer- und/oder Regeleinrichtung 29, insbesondere auf einem Mikroprozessor, ausgeführt wird.

## Patentansprüche

1. Verfahren zum Schlagverfestigen von Übergangsradien (8) einer Kurbelwelle (4), insbesondere von Übergangsradien (8) zwischen Pleuellagerzapfen (5) und Kurbelwangen (7) und/oder Übergangsradien (8) zwischen Hauptlagerzapfen (6) und den Kurbelwangen (7) der Kurbelwelle (4), **dadurch gekennzeichnet, dass**
zum Einbringen einer Schlagkraft (F_{S}) in wenigstens einen der Übergangsradien (8) entlang des ringförmig um die Kurbelwelle (4) umlaufenden jeweiligen Übergangsradius (8) ein hoch beanspruchter Bereich (B_{MAX}), ein wenig beanspruchter Bereich (B_{MIN}) und dazwischen liegende Zwischenbereiche (B_{ZW}) definiert werden, wonach derart schlagverfestigt wird, dass die in die Zwischenbereiche (B_{ZW}) eingebrachte Schlagkraft (F_{S}) in Richtung auf den hoch beanspruchten Bereich (B_{MAX}) erhöht wird, und wobei das Schlagverfestigen derart erfolgt, dass sich die Eindrücke (28) eines Schlagkopfes (21) wenigstens eines Schlagwerkzeugs (16) entlang des ringförmig um die Kurbelwelle (4) umlaufenden jeweiligen Übergangsradius (8) definiert überlappen.

2. Verfahren nach Anspruch 1,
**dadurch gekennzeichnet, dass**
die in die Zwischenbereiche (B_{ZW}) eingebrachte Schlagkraft (F_{S}) stetig in Richtung auf den hoch beanspruchten Bereich (B_{MAX}) erhöht wird.

3. Verfahren nach Anspruch 1 und 2,
**dadurch gekennzeichnet, dass**
die in die Zwischenbereiche (B_{ZW}) eingebrachte Schlagkraft (F_{S}) gleichmäßig bzw. linear in Richtung auf den hoch beanspruchten Bereich (B_{MAX}) erhöht wird.

4. Verfahren nach einem der Ansprüche 1, 2 oder 3,
**dadurch gekennzeichnet, dass**
in den wenig beanspruchten Bereich (B_{MIN}) beim Schlagverfestigen keine Schlagkraft (F_{S}) oder nur eine Schlagkraft (F_{S}) eingebracht wird, die geringer ist als oder gleich groß ist wie die geringste Schlagkraft (F_{S}), die in die Zwischenbereiche (B_{ZW}) eingebracht wird.

5. Verfahren nach einem der Ansprüche 1 bis 4,
**dadurch gekennzeichnet, dass**
in den hoch beanspruchten Bereich (B_{MAX}) beim Schlagverfestigen eine Schlagkraft (F_{S}) eingebracht wird, die größer ist als oder gleich groß ist wie die größte Schlagkraft (F_{S}), die in die Zwischenbereiche (B_{ZW}) eingebracht wird.

6. Verfahren nach einem der Ansprüche 1 bis 5,
**dadurch gekennzeichnet, dass**
die Schlagkraft (F_{S}), die beim Schlagverfestigen in den hoch beanspruchten Bereich (B_{MAX}) eingebracht wird, anhand der gewünschten Dauerfestigkeit der Kurbelwelle (4) und/oder der gewünschten Dauerfestigkeit von Abschnitten der Kurbelwelle (4) bestimmt wird.

7. Verfahren nach einem der Ansprüche 1 bis 6,
**dadurch gekennzeichnet, dass**
die Schlagkraft (F_{S}), die beim Schlagverfestigen in den hoch beanspruchten Bereich (B_{MAX}) eingebracht wird, konstant ist.

8. Verfahren nach einem der Ansprüche 1 bis 7,
**dadurch gekennzeichnet, dass**
der hoch beanspruchte Bereich (B_{MAX}) entlang des ringförmig um den Pleuellagerzapfen (5) umlaufenden Übergangsradius (8), ausgehend von einem höchstbelasteten Punkt (UT) des Pleuellagerzapfens (5) wenigstens +/- 20°, vorzugsweise wenigstens +/- 30°, weiter bevorzugt wenigstens +/- 40°, besonders bevorzugt wenigstens +/- 50°, ganz besonders bevorzugt wenigstens +/-60°, beispielsweise wenigstens +/- 70°, wenigstens +/- 80° oder wenigstens +/- 90° beträgt.

9. Verfahren nach einem der Ansprüche 1 bis 8,
**dadurch gekennzeichnet, dass**
der hoch beanspruchte Bereich (B_{MAX}) entlang des ringförmig um den Hauptlagerzapfen (6) umlaufenden Übergangsradius (8), ausgehend von einem höchstbelasteten Punkt (OT) des Hauptlagerzapfens (6) wenigstens +/- 20°, vorzugsweise wenigstens +/- 30°, weiter bevorzugt wenigstens +/- 40°, besonders bevorzugt wenigstens +/- 50°, ganz besonders bevorzugt wenigstens +/-60°, beispielsweise wenigstens +/- 70°, wenigstens +/- 80° oder wenigstens +/- 90° beträgt.

10. Verfahren nach Anspruch 9,
**dadurch gekennzeichnet, dass**
der höchstbelastete Punkt (OT) eines Übergangsradius (8) eines Hauptlagerzapfens (6) im Querschnitt der Kurbelwelle (4) auf dem Schnittpunkt des
- Übergangsradius (8) des Hauptlagerzapfens (6) mit der
- Verbindungslinie (x) der Mittelpunkte (M_{H}, M_{P}) des Hauptlagerzapfens (6) und des an den Übergangsradius (8) des Hauptlagerzapfens (6) angrenzenden Pleuellagerzapfens (5) liegt.

11. Verfahren nach einem der Ansprüche 1 bis 10,
**dadurch gekennzeichnet, dass**
der Schlagkopf (21) des wenigstens einen Schlagwerkzeugs (16) die Schlagkraft (F_{S}) unter einem verstellbaren Schlagwinkel (α) in den Übergangsradius (8) einbringt.

12. Verfahren nach Anspruch 11,
**dadurch gekennzeichnet, dass**
zum Schlagverfestigen eine Schlageinrichtung (1) verwendet wird, die einen Schlagkolben (23), eine Umlenkeinheit (20) und das wenigstens eine Schlagwerkzeug (16) aufweist, wobei das wenigstens eine Schlagwerkzeug (16) an der Umlenkeinheit (20) befestigt ist, und wobei der Schlagkolben (23) über die Umlenkeinheit (20) einen Kraftstoß auf das wenigstens eine Schlagwerkzeug (16) überträgt, wonach der Schlagkopf (21) des wenigstens einen Schlagwerkzeugs (16) unter dem Schlagwinkel (α) die Schlagkraft (F_{S}) in den Übergangsradius (8) einbringt, und wobei der Schlagwinkel (α) eingestellt wird, indem der Abstand (d) zwischen einem Umlenkpunkt (U_{P}) der Umlenkeinheit (20) und dem vorderen Ende des Schlagkopfes (21) des wenigstens einen Schlagwerkzeugs (16) eingestellt wird.

13. Verfahren nach einem der Ansprüche 1 bis 12,
**dadurch gekennzeichnet, dass**
die Kurbelwelle (4) zum Schlagverfestigen mittels einer Antriebseinrichtung (3) zunächst entlang einer Drehrichtung in eine Schlagposition gedreht wird, wobei eine Arretiereinrichtung (12) vorgesehen ist, um die Kurbelwelle (4) in der Schlagposition zu arretieren, wonach durch wenigstens ein Schlagwerkzeug (16) die Schlagkraft (F_{S}) in wenigstens einen Übergangsradius (8) eingebracht wird.

14. Kurbelwelle (4), hergestellt nach einem Verfahren gemäß einem der Ansprüche 1 bis 13.

## Claims

1. A method for the impact hardening of transition radii (8) of a crankshaft (4), in particular of transition radii (8) between connecting-rod bearing journals (5) and crank webs (7) and/or transition radii (8) between main bearing journals (6) and the crank webs (7) of the crankshaft (4),
**characterized in that**,
for the introduction of an impact force (Fs) into at least one of the transition radii (8), a highly loaded region (B_{MAX}), a lightly loaded region (B_{MIN}) and interposed intermediate regions (B_{ZW}) are defined along the respective transition radius (8) running in annularly encircling fashion around the crankshaft (4), wherein impact hardening is performed such that the impact force (F_{S}) introduced into the intermediate regions (B_{ZW}) is increased in the direction of the highly loaded region (B_{MAX}) and wherein the impact hardening is performed in such a way that the impressions (28) of an impact head (21) of at least one impact tool (16) overlap in a defined manner along the respective transition radius (8) running in annularly encircling fashion around the crankshaft (4).

2. The method as claimed in claim 1,
**characterized in that**
the impact force (F_{S}) introduced into the intermediate regions (B_{ZW}) is increased steadily in the direction of the highly loaded region (B_{MAX}).

3. The method as claimed in claims 1 and 2,
**characterized in that**
the impact force (F_{S}) introduced into the intermediate regions (B_{ZW}) is increased uniformly and/or linearly in the direction of the highly loaded region (B_{MAX}).

4. The method as claimed in any of claims 1, 2 and 3,
**characterized in that**,
during the impact hardening, no impact force (F_{S}) or only an impact force (F_{S}) lower than or equal to the lowest impact force (F_{S}) introduced into the intermediate regions (B_{ZW}) is introduced into the lightly loaded region (B_{MIN}).

5. The method as claimed in any of claims 1 to 4,
**characterized in that**,
during the impact hardening, an impact force (F_{S}) higher than or equal to the highest impact force (F_{S}) introduced into the intermediate regions (B_{ZW}) is introduced into the highly loaded region (B_{MAX}).

6. The method as claimed in any of claims 1 to 5,
**characterized in that**
the impact force (F_{S}) that is introduced into the highly loaded region (B_{MAX}) during the impact hardening is determined on the basis of the desired fatigue strength of the crankshaft (4) and/or the desired fatigue strength of portions of the crankshaft (4).

7. The method as claimed in any of claims 1 to 6,
**characterized in that**
the impact force (F_{S}) that is introduced into the highly loaded region (B_{MAX}) during the impact hardening is constant.

8. The method as claimed in any of claims 1 to 7,
**characterized in that**,
along the transition radius (8) running in annularly encircling fashion around the connecting-rod bearing journal (5), the highly loaded region (B_{MAX}) amounts to at least +/- 20°, preferably at least +/- 30°, more preferably at least +/- 40°, particularly preferably at least +/- 50°, very particularly preferably at least +/- 60°, for example at least +/- 70°, at least +/- 80° or at least +/- 90°, proceeding from a most highly loaded point (UT) of the connecting-rod bearing journal (5).

9. The method as claimed in any of claims 1 to 8,
**characterized in that**
along the transition radius (8) running in annularly encircling fashion around the main bearing journal (6), the highly loaded region (B_{MAX}) amounts to at least +/- 20°, preferably at least +/- 30°, more preferably at least +/- 40°, particularly preferably at least +/- 50°, very particularly preferably at least +/- 60°, for example at least +/- 70°, at least +/- 80° or at least +/- 90°, proceeding from a most highly loaded point (OT) of the main bearing journal (6).

10. The method as claimed in claim 9,
**characterized in that**
the most highly loaded point (OT) of a transition radius (8) of a main bearing journal (6) lies, in the cross section of the crankshaft (4), at the point of intersection of the
- transition radius (8) of the main bearing journal (6) with the
- connecting line (x) of the central points (M_{H}, M_{P}) of the main bearing journal (6) and of the connecting-rod bearing journal (5) adjoining the transition radius (8) of the main bearing journal (6).

11. The method as claimed in any of claims 1 to 10,
**characterized in that**
the impact head (21) of the at least one impact tool (16) introduces the impact force (F_{S}) into the transition radius (8) at an adjustable impact angle (α).

12. The method as claimed in claim 11,
**characterized in that**,
for the impact hardening, an impact device (1) is used which has an impact piston (23), a deflecting unit (20) and the at least one impact tool (16), wherein the at least one impact tool (16) is fastened to the deflecting unit (20), and wherein the impact piston (23) transmits an impulse to the at least one impact tool (16) by means of the deflecting unit (20), following which the impact head (21) of the at least one impact tool (16) introduces the impact force (F_{S}) into the transition radius (8) at the impact angle (α), and wherein the impact angle (α) is set through adjustment of the spacing (d) between a deflecting point (U_{P}) of the deflecting unit (20) and the front end of the impact head (21) of the at least one impact tool (16).

13. The method as claimed in any of claims 1 to 12,
**characterized in that**,
for the impact hardening, the crankshaft (4) is firstly rotated by means of a drive device (3) along a direction of rotation into an impact position, wherein an arresting device (12) is provided in order to arrest the crankshaft (4) in the impact position, following which the impact force (F_{S}) is introduced into at least one transition radius (8) by means of at least one impact tool (16).

14. A crankshaft (4) produced in accordance with a method as claimed in any of claims 1 to 13.

## Revendications

1. Procédé d'écrouissage par impact de rayons de transition (8) d'un vilebrequin (4), en particulier de rayons de transition (8) entre des tourillons de coussinet de bielle (5) et des flasques de manivelle (7) et/ou de rayons de transition (8) entre des tourillons de palier principal (6) et les flasques de manivelle du vilebrequin (4),
**caractérisé en ce que**, pour introduire une force d'impact (F_{S}) dans au moins un des rayons de transition (8), le long du rayon de transition (8) concerné tournant de façon circulaire autour du vilebrequin (4), sont définies une zone fortement sollicitée (B_{MAX}), une zone peu sollicitée (B_{MIN}) et entre elles des zones intermédiaires (B_{ZW}), après quoi l'écrouissage est effectué de telle sorte que la force d'impact (F_{S}) introduite dans les zones intermédiaires (B_{ZW}) est augmentée en direction de la zone fortement sollicitée (B_{MAX}), et selon lequel l'écrouissage a lieu de telle sorte que les empreintes (28) d'une tête de frappe (21) d'au moins un outil de frappe (16) se chevauchent de façon définie le long du rayon de transition (8) concerné tournant de façon circulaire autour du vilebrequin (4).

2. Procédé selon la revendication 1,
**caractérisé en ce que**
la force d'impact (F_{S}) introduite dans les zones intermédiaires (B_{ZW}) est augmentée constamment en direction de la zone fortement sollicitée (B_{MAX}).

3. Procédé selon les revendications 1 et 2,
**caractérisé en ce que**
la force d'impact (F_{S}) introduite dans les zones intermédiaires (B_{ZW}) est augmentée de façon régulière ou linéaire en direction de la zone fortement sollicitée (B_{MAX}).

4. Procédé selon l'une des revendications 1, 2 ou 3,
**caractérisé en ce que**
lors de l'écrouissage, dans la zone peu sollicitée (B_{MIN}) n'est introduite aucune force d'impact (F_{S}) ou uniquement une force d'impact (F_{S}) qui est inférieure ou égale à la force d'impact (F_{S}) minimale qui est introduite dans les zones intermédiaires (B_{ZW}).

5. Procédé selon l'une des revendications 1 à 4,
**caractérisé en ce que**
lors de l'écrouissage, dans la zone fortement sollicitée (B_{MAX}) est introduite une force d'impact (F_{S}) qui est supérieure ou égale à la force d'impact (F_{S}) maximale qui est introduite dans les zones intermédiaires (B_{ZW}).

6. Procédé selon l'une des revendications 1 à 5,
**caractérisé en ce que**
la force d'impact (F_{S}) qui est introduite dans la zone fortement sollicitée (B_{MAX}) lors de l'écrouissage est déterminée sur la base de la résistance à la fatigue souhaitée du vilebrequin (4) et/ou de la résistance à la fatigue souhaitée de sections du vilebrequin (4).

7. Procédé selon l'une des revendications 1 à 6,
**caractérisé en ce que**
la force d'impact (F_{S}) qui est introduite dans la zone fortement sollicitée (B_{MAX}) lors de l'écrouissage est constante.

8. Procédé selon l'une des revendications 1 à 7,
**caractérisé en ce que**
la zone fortement sollicitée (B_{MAX}) le long du rayon de transition (8) tournant de façon circulaire autour du tourillon de coussinet de bielle (5) à partir d'un point le plus fortement sollicité (UT) du tourillon de coussinet de bielle (5) est d'au moins +/- 20°, de préférence d'au moins +/-30°, plus préférablement d'au moins +/- 40°, de façon particulièrement préférable d'au moins +/- 50°, de façon tout particulièrement préférable d'au moins +/- 60°, par exemple d'au moins +/-70°, d'au moins +/- 80° ou d'au moins +/- 90°.

9. Procédé selon l'une des revendications 1 à 8,
**caractérisé en ce que**
la zone fortement sollicitée (B_{MAX}) le long du rayon de transition (8) tournant de façon circulaire autour du tourillon de palier principal (6) à partir d'un point le plus fortement sollicité (OT) du tourillon de palier principal (6) est d'au moins +/- 20°, de préférence d'au moins +/-30°, plus préférablement d'au moins +/- 40°, de façon particulièrement préférable d'au moins +/- 50°, de façon tout particulièrement préférable d'au moins +/- 60°, par exemple d'au moins +/-70°, d'au moins +/- 80° ou d'au moins +/- 90°.

10. Procédé selon la revendication 9,
**caractérisé en ce que**
le point le plus fortement sollicité (OT) d'un rayon de transition (8) d'un tourillon de palier principal (6) dans la section du vilebrequin (4) se trouve au point d'intersection du
- rayon de transition (8) du tourillon de palier principal (6) avec la
- ligne de liaison (x) des points centraux (M_{H}, M_{P}) du tourillon de palier principal (6) et du tourillon de coussinet de bielle (5) adjacent au rayon de transition (8) du tourillon de palier principal (6).

11. Procédé selon l'une des revendications 1 à 10,
**caractérisé en ce que**
la tête de frappe (21) de l'au moins un outil de frappe (16) introduit la force d'impact (F_{S}) sous un angle d'impact (α) réglable dans le rayon de transition (8).

12. Procédé selon la revendication 11,
**caractérisé en ce que**
pour l'écrouissage est utilisé un dispositif de frappe (1) qui présente un piston de frappe (23), une unité de déviation (20) et l'au moins un outil de frappe (16), l'au moins un outil de frappe (16) étant fixé sur l'unité de déviation (20) et le piston de frappe (23) transmettant par le biais de l'unité de déviation (20) une impulsion de force à l'au moins un outil de frappe (16), après quoi la tête de frappe (21) de l'au moins un outil de frappe (16) introduit sous l'angle d'impact (α) la force d'impact (F_{S}) dans le rayon de transition (8), l'angle d'impact (α) étant réglé du fait du réglage de la distance (d) entre un point de déviation (U_{P}) de l'unité de déviation (20) et l'extrémité antérieure de la tête de frappe (21) de l'au moins un outil de frappe (16).

13. Procédé selon l'une des revendications 1 à 12,
**caractérisé en ce que**
pour l'écrouissage, le vilebrequin (4) est d'abord tourné au moyen d'un dispositif d'entraînement (3) le long d'une direction de rotation dans une position de frappe, un dispositif de verrouillage (12) étant prévu pour verrouiller le vilebrequin (4) dans la position de frappe, après quoi la force d'impact (F_{S}) est introduite par au moins un outil de frappe (16) dans au moins un rayon de transition (8).

14. Vilebrequin (4) fabriqué suivant un procédé selon l'une des revendications 1 à 13.
